(19) Europäisches Patentamt / European Patent Office / Office européen des brevets

(11) **EP 4 391 607 A1**

(12) # EUROPEAN PATENT APPLICATION
published in accordance with Art. 153(4) EPC

(43) Date of publication:
**26.06.2024  Bulletin 2024/26**

(21) Application number: **21957177.5**

(22) Date of filing: **18.09.2021**

(51) International Patent Classification (IPC):
**H04W 4/48** (2018.01)   **H04L 9/08** (2006.01)

(52) Cooperative Patent Classification (CPC):
**H04L 9/08; H04W 4/48**

(86) International application number:
**PCT/CN2021/119432**

(87) International publication number:
**WO 2023/039900 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **PENG, Jianfen
  Shenzhen, Guangdong 518129 (CN)**
• **GUO, Zhipeng
  Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **KEY TRANSMISSION METHOD AND APPARATUS**

(57)   This application discloses a key transmission method and apparatus. In the method, a first component may receive a first instruction from a first key tool. The first instruction includes first information associated with an initial key. The initial key may be at least used to generate a shared key. The shared key may be at least used to encrypt data including geographical location information. Then, the first component may obtain the initial key according to the first instruction. In this way, the first key tool is used to transmit the first information associated with the initial key to the first component in a vehicle, so that the first component can obtain the initial key based on the first information. This can effectively improve key transmission security, so that the shared key generated based on the initial key cannot be obtained by another device, to effectively improve security performance of communication between components of the vehicle, and effectively protect data associated with the components.

EP 4 391 607 A1

```
┌──────────────┐                          ┌──────────────┐
│ Key tool 200 │                          │First component│
└──────┬───────┘                          │     102       │
       │                                  └──────┬────────┘
┌──────┴───────┐                                 │
│S301: Determine an                              │
│initial key of a vehicle                        │
└──────┬───────┘                                 │
       │   S302: First instruction (first information)
       │─────────────────────────────────────────▶│
       │                                  ┌────────┴────────┐
       │                                  │S303: Obtain the │
       │                                  │initial key according│
       │                                  │to the first instruction│
       │                                  └────────┬────────┘
       │   S304: First response information         │
       │   (a filling result of the initial key)    │
       │◀ ─ ─ ─ ─ ─ ─ ─ ─ ─ ─ ─ ─ ─ ─ ─ ─ ─ ─ ─ ─ ─│
```

FIG. 3

## Description

## TECHNICAL FIELD

Embodiments of this application relate to the field of communication technologies, and in particular, to a key transmission method and apparatus.

## BACKGROUND

With development of intelligent vehicles, different components (for example, a domain controller, an electronic control unit, and a sensor) in the intelligent vehicle may perform communication interaction, to coordinately complete a service of the intelligent vehicle. For example, when the intelligent vehicle performs an intelligent driving service, geographical location information may be transmitted between the sensor and an intelligent driving controller.

To ensure secure communication between different components, a shared key between the different components needs to be used to encrypt related service data for transmission. The shared key is generated based on an initial key of the vehicle. In an existing filling process of the initial key, security of the initial key cannot be ensured, and consequently service data security of the vehicle is threatened. Therefore, how to securely transmit a key to improve security performance of communication between different components is a technical problem that needs to be urgently resolved.

## SUMMARY

Embodiments of this application disclose a key transmission method and apparatus, to improve key transmission security, so as to improve security performance of communication between components in a vehicle, and protect service data associated with the vehicle.

According to a first aspect, an embodiment of this application provides a key transmission method. The method may be performed by a first component in a vehicle or a chip configured in a first component. The method includes: receiving a first instruction from a first key tool, where the first instruction includes first information associated with an initial key; and obtaining the initial key according to the first instruction. The initial key is at least used to generate a shared key, and the shared key is at least used to encrypt data including geographical location information. It should be understood that the first component may be a controller, an electronic control unit, a sensor, or the like in the vehicle. This is not specifically limited in embodiments of this application. The first instruction may be used to fill the initial key for the first component.

In this solution, the first key tool is used to transmit the first information associated with the initial key to the first component in the vehicle, so that the first component can obtain the initial key based on the first information. This can effectively improve key transmission security, so that the shared key generated based on the initial key cannot be obtained by another device, to effectively improve security performance of communication between components of the vehicle.

The data of the geographical location information may include data related to one or more of the following: longitude and latitude, an elevation, and a geographical track. For example, the data of the geographical location information may include data whose longitude and latitude data range and/or elevation data range falls within a preset threshold range. Alternatively, the data of the geographical location information may be data related to a geographical location. This is not specifically limited in embodiments of this application. The elevation is a height of a point relative to a reference plane, for example, a height of the top of the vehicle relative to the ground. Correspondingly, elevation data includes data reflecting the height of the point relative to the reference plane, for example, data reflecting the height of the top of the vehicle relative to the ground.

The shared key may be a shared key of all components in the vehicle, or may be a shared key of a component associated with a function domain (for example, an intelligent driving domain) in the vehicle. This is not limited in embodiments of this application.

In a possible design, the initial key is unrelated to an original equipment manufacturer (original equipment manufacturer, OEM), or is unrelated to an OEM having no navigation electronic map production qualification. The OEM herein is an OEM associated with the vehicle. In this design, an entire transmission process of the initial key does not require participation of the OEM associated with the vehicle, so that the initial key is invisible to the OEM, or does not require participation of the OEM having no navigation electronic map production qualification, so that the initial key is invisible to the OEM having no navigation electronic map production qualification. This can further improve key transmission security.

In a possible design, the initial key is related to an organization having a navigation electronic map production qualification. This can ensure security of the initial key, thereby ensuring transmission security of the geographical location information.

In a possible design, the initial key is different from an authentication key, and the authentication key is from the OEM associated with the vehicle. The first component may determine at least one function key based on the authentication key. The at least one function key corresponds to at least one service function of the first component. In embodiments of this application, a service related to the geographical location information can be implemented based on the initial key from the first key tool and the shared key generated by using the initial key. A service unrelated to the geographical location information can be implemented based on the authentication key from the OEM and the function key generated by using the authentication key. In this way, different keys can be used for the service related to the geographical location information and the service unrelated to the geographical location information, to further ensure transmission security of the data related to the geographical location information.

The first information may be implemented in a plurality of manners, including but not limited to the following manners.

Manner 1: The first information includes a first ciphertext, and the first ciphertext includes information obtained by encrypting the initial key by using a first public key of the first component. Correspondingly, a process in which the first component obtains the initial key according to the first instruction may be: decrypting the first ciphertext based on a first private key of the first component, to obtain the initial key. The first private key corresponds to the first public key.

In Manner 1, the initial key is encrypted for transmission by using the first public key of the first component, so that the first component can decrypt the ciphertext of the initial key by using the first private key corresponding to the first public key, to obtain the initial key. In an optional design, the first component may generate the first public key and the first private key corresponding to the first public key, and send the first public key to the first key tool. The first key tool encrypts the initial key by using the first public key, to obtain the first ciphertext, and sends the first ciphertext to the first component. Because the first component has the first private key corresponding to the first public key, the first component can decrypt the first ciphertext based on the first private key, to obtain the initial key. Transmission of the initial key is implemented according to the asymmetric encryption algorithm, to effectively improve transmission security of the initial key.

Manner 2: The first information includes the initial key. Correspondingly, a process in which the first component obtains the initial key according to the first instruction may be: obtaining the initial key according to the first instruction in a wired connection manner.

In Manner 2, in the wired connection manner, the first component can directly receive the initial key, and the first component does not need to perform an encryption/decryption operation. Therefore, a first component having no encryption/decryption capability can also obtain the initial key, to ensure security of communication between different components. In addition, the initial key is obtained in this manner, to simplify an operation of the first component, and reduce component implementation complexity and component costs.

In a possible design, the first component may further send first response information to the first key tool. The first response information includes a filling result of the initial key. In this design, the first response information sent by the first component includes the filling result of the initial key, so that the first key tool can better monitor a key filling result of the first component.

The filling result of the initial key may indicate that the initial key is successfully filled or the initial key fails to be filled.

In a possible design, the filling result of the initial key includes: a first identifier, where the first identifier indicates that the initial key is successfully filled; and/or a third ciphertext, where the third ciphertext includes information obtained by encrypting, by using the initial key or a derived key of the initial key, a first random number included in the first instruction. In this design, the filling result of the initial key includes the first identifier and/or the third ciphertext, so that the first key tool can determine, based on the first identifier and/or the third ciphertext, whether the initial key is successfully filled.

In a possible design, the filling result of the initial key may include a second identifier. The second identifier may indicate that the initial key fails to be filled. In this design, the filling result of the initial key includes the second identifier, so that the first key tool can determine, based on the second identifier, that the initial key fails to be filled.

In a possible design, the filling result of the initial key may further include an identifier of the vehicle and/or an identifier of the first component. In this way, the first key tool can monitor a filling status of the initial key of the vehicle and/or the first component.

In a possible design, the first component may further receive a second instruction from the first key tool or a second key tool, where the second instruction includes second information associated with the shared key; and obtain the shared key based on the initial key and the second information. The second instruction may be used to fill the shared key for the first component. In this design, the first component can receive a shared key filling instruction from the first key tool, that is, the first key tool can be used to fill the initial key and the shared key. An operation of key filling of the first component can be simplified, and a design of a key tool used for key filling can also be simplified. Alternatively, according to the foregoing design, the first component can fill the shared key by using the second key tool different from the first key tool, to implement flexibility of filling of the initial key and the shared key. It may be understood that, for the latter design, the first key tool can be used only to fill the initial key.

In a possible design, the first key tool and the second key tool may correspond to different key filling environments. For example, the first key tool corresponds to a component supplier/component production line, that is, at the component supplier and/or in the component production line, the first key tool may be used to fill the initial key of the first component, or fill the initial key and the shared key of the first component. The second key tool corresponds to an OEM production line, that is, in the OEM production line, the second key tool may be used to fill the shared key of the first component. In this design, in the different key filling environments, different key tools are used to fill the initial key and the shared key of the first component. In this way, not only flexibility of key filling can be implemented, but also the key tools adapted to the different key filling environments can be designed. This further ensures security of key filling in the different key filling environments, thereby improving security performance of communication between the different components in the vehicle.

In another possible design, the first key tool and the second key tool may alternatively correspond to the different components in the vehicle. For example, the first key tool corresponds to any component in the vehicle or a component that is in the vehicle and that participates in geographic information exchange. In this case, the first key tool may be used to fill the initial key or the initial key and the shared key for the any component in the vehicle or the component that is in the vehicle and that participates in geographic information exchange. The second key tool only corresponds to a main control component (for example, a software and hardware integrated platform, namely, a vehicle computing platform (vehicle computing platform), that is used to support intelligent driving, or a gateway) in the vehicle or a component associated with a specific function domain (for example, the intelligent driving domain or a human machine interface (human machine interface, HMI)). In this case, the second key tool may be used to fill the shared key for the main control component in the vehicle or the component associated with the specific function domain. In this design, for the different components in the vehicle, different key tools are used to fill the initial key and/or the shared key. In this way, not only flexibility of key filling can be implemented, but also the key tools adapted to the different components in the vehicle can be designed. This further ensures security of key filling of the different components in the vehicle, thereby improving security performance of communication between the different components in the vehicle.

In another possible design, the first key tool and the second key tool may alternatively correspond to different component suppliers. For example, the first key tool corresponds to a component supplier 1. In this case, the first key tool may be used to fill the initial key or the initial key and shared key for any component that is in the vehicle and that is associated with the component supplier 1. For example, the second key tool corresponds to a component supplier 2. In this case, the second key tool may be used to fill the shared key for any component that is in the vehicle and that is associated with the component supplier 2. In this design, for the different component suppliers, different key tools are used to fill the initial key and/or the shared key of the first component. In this way, not only flexibility of key filling can be implemented, but also the key tools adapted to the different component suppliers can be designed. This further ensures security of key filling of the different component suppliers, thereby improving security performance of communication between the different components in the vehicle.

It should be noted that there are a plurality of implementations in which the first component obtains the shared key based on the initial key and the second information, including but not limited to the following manners.

Manner 1: The second information may be used as a keying material, and the first component obtains, according to a symmetric encryption algorithm or based on a key derivation function or a message authentication code of a symmetric encryption algorithm, the shared key based on the initial key and the second information.

In Manner 1, the second information can be used as the keying material. The first component generates, according to a specific key algorithm, the shared key based on the initial key and the second information, and does not need to transmit the shared key by using a key tool. In this way, the another device cannot obtain the shared key of the first component, to effectively improve security of the shared key of the first component. In addition, Manner 1 has a low requirement on an algorithm of the first component. For example, the shared key can be obtained as long as the first component supports any symmetric encryption algorithm, any message authentication code according to a symmetric encryption algorithm, or any key derivation algorithm. This reduces implementation complexity and costs of the first component. Manner 2: The second information includes information obtained by encrypting the shared key by using the initial key, and therefore the first component may obtain the shared key based on the initial key and the second information. For example, the second information is decrypted by using the initial key, to obtain the shared key.

In Manner 2, the second information includes a ciphertext of the shared key, and the ciphertext is the information obtained by encrypting the shared key by using the initial key. The first component can obtain the shared key based on the initial key and the ciphertext. However, for another device having no initial key, the shared key cannot be restored even if the ciphertext is received. This effectively improves security of the shared key of the first component. In addition, Manner 2 has a low requirement on an algorithm of the first component. For example, the shared key can be obtained as long as the first component supports any decryption algorithm. This reduces implementation complexity and costs of the first component.

It should be noted that the first component may alternatively fill the shared key through information exchange with a second component, which includes but is not limited to the following implementations.

Manner 1: The second component is at least configured to distribute key information (for example, a second instruction) from the first key tool or a second key tool. Correspondingly, the first component may further receive the second instruction forwarded by the second component, and fill the shared key by using the second instruction. The second component is another component that is in the vehicle and that is different from the first component.

In Manner 1, the second component directly forwards, to the first component, the second instruction from the first key tool or the second key tool, to fill the shared key of the first component. In this way, the first key tool and the second key tool only need to communicate with the second component, do not need to perform communication interaction with another component in the vehicle, and can also fill the shared key for the another component in the vehicle. This effectively improves filling efficiency of the shared key of all the components in the vehicle.

Manner 2: The first component may alternatively receive a third instruction from the second component, where the third instruction includes third information associated with the shared key; and obtain the shared key based on the initial key and the third information. The third instruction may be used to fill the shared key for the first component. The third instruction may be obtained by the second component by processing a second instruction. For example, the second component may convert a communication protocol format of the second instruction, to obtain the third instruction. For another example, the second component may convert a communication protocol format of second information included in the second instruction, to obtain the third information included in the third instruction. Alternatively, the third information may be generated by the second component. For example, the third information includes a keying material generated by the second component. For another example, the second component may generate the shared key, and determine the third information based on the shared key and the initial key.

It should be understood that an implementation in which "the first component obtains the shared key based on the initial key and the third information" is similar to an implementation in which "the first component obtains the shared key based on the initial key and the second information". Refer to the foregoing descriptions. Only the "second information" needs to be replaced with the "third information". Details are not described herein again.

In Manner 2, the second component can perform communication protocol format conversion on the second instruction or the second information from the first key tool or the second key tool, and correspondingly, obtain the third instruction or the third information. In this way, the third instruction or the third information can be better adapted to a communication protocol between the first component and the second component, and the first component can fill the shared key according to the instruction (namely, the third instruction). In addition, the first component does not need to obtain a shared key filling instruction from the first key tool or the second key tool, to effectively improve filling efficiency of the shared key. Alternatively, the second component can generate a shared key filling instruction (for example, the third instruction or the third information), to fill the shared key for another component (namely, the first component) in the vehicle. In this way, filling of the shared key no longer depends on the first key tool or the second key tool. This simplifies a filling procedure of the shared key.

In a possible design, the first component may further send second response information in response to the second instruction. The second response information includes a filling result of the shared key. The first component may send the second response information to the first key tool or the second key tool. This is not specifically limited in embodiments of this application.

In a possible design, the first component may further send third response information in response to the third instruction. The third response information includes a filling result of the shared key. The first component may send the third response information to the second component.

In a possible design, the filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction or a second random number included in the third instruction. In this design, the filling result of the shared key includes the first identifier and/or the third ciphertext, so that the first key tool can determine, based on the first identifier and/or the third ciphertext, whether the shared key is successfully filled.

In a possible design, the filling result of the shared key includes a fourth identifier. The fourth identifier may indicate that the shared key fails to be filled. In this design, the filling result of the shared key includes the fourth identifier, so that the first key tool can determine, based on the fourth identifier, that the shared key fails to be filled.

In a possible design, the filling result of the shared key may further include the identifier of the vehicle and/or the identifier of the first component. In this design, the first key tool or the second key tool can monitor a filling status of the shared key of the vehicle and/or the first component.

In a possible design, the first component may further receive a fourth instruction from the first key tool or a key detection tool, where the fourth instruction includes a third random number; determine a first check value based on the third random number and the shared key; and send fourth response information, where the fourth response information includes the first check value. The fourth instruction may be used to detect whether the shared key of the first component is abnormal. In this design, the first component receives the fourth instruction from the first key tool or the key detection tool, generates the first check value based on the random number included in the fourth instruction and the shared key of the first component, and returns the first check value to the first key tool or the key detection tool. In this way, the first key tool or the key detection tool can determine, based on the first check value, whether the shared key of the first component is consistent with a local shared key of the first key tool or the key detection tool, and then determine whether the shared key of the first component is abnormal. This helps the first key tool or the key detection tool monitor an abnormality of the shared key of the first component. When the abnormality exists, this can help ensure, through a subsequent operation, that the shared key of the first component is consistent with the local shared key of the first key tool or the key detection tool, thereby ensuring security of communication between the components of the vehicle.

In a possible design, the first component is further configured to receive a fifth instruction from the first key tool or the key detection tool. The fifth instruction includes a fifth random number, and the fifth instruction may be used to detect whether the initial key of the first component is abnormal. The first component is further configured to determine a third check value based on the fifth random number and the initial key. The first component is further configured to send fifth response information. The fifth response information includes the third check value. When the initial key is abnormal, this can help ensure, through a subsequent operation, that the initial key of the first component is consistent with a local initial key of the first key tool, thereby ensuring security of the shared key determined subsequently based on the initial key.

According to a second aspect, an embodiment of this application further provides a key transmission method. The method may be performed by a second component in a vehicle or a chip configured in a second component. The method includes: The second component obtains a shared key filling instruction. The second component sends the shared key filling instruction to a first component. The shared key filling instruction is used to fill a shared key for the first component. The shared key is at least used to encrypt data including geographical location information.

For specific descriptions of the shared key and the data of the geographical location information, refer to the related descriptions in any one of the first aspect or the possible designs of the first aspect.

That the second component obtains a shared key filling instruction may be that the second component generates or receives the shared key filling instruction.

In a possible design, the shared key filling instruction may be a second instruction. The second instruction includes second information associated with the shared key. In this design, that the second component obtains a shared key filling instruction includes: The second component receives the second instruction from a first key tool or a second key tool. The shared key filling instruction includes the second instruction. For example, the shared key filling instruction is the second instruction. It should be understood that, in this design, the second component may directly use the second instruction from the first key tool or the second key tool as the shared key filling instruction, and forward the shared key filling instruction to the first component, to fill the shared key of the first component. According to this design, an operation procedure of the second component can be simplified, and implementation is simple. In addition, the first component does not need to obtain the shared key filling instruction from the first key tool or the second key tool, to effectively improve filling efficiency of the shared key.

The second information may be implemented in a plurality of manners. For example, the first key tool or the second key tool generates a keying material (for example, the keying material is randomly generated or generated according to a specific rule), and uses the keying material as the second information in the second instruction. For another example, the first key tool or the second key tool may generate the shared key (for example, the shared key is randomly generated or generated according to a specific rule), obtain a ciphertext of the shared key based on an initial key and the shared key, and use the ciphertext as the second information. For still another example, the first key tool or the second key tool may encrypt the shared key by using an initial key, to obtain a ciphertext of the shared key, and use the ciphertext as the second information.

In another possible design, the shared key filling instruction may include a third instruction. For example, the shared key filling instruction is the third instruction. The third instruction includes third information associated with the shared key. In this design, the third instruction may be implemented in a plurality of manners, including but not limited to the following implementations.

Manner 1: The third instruction is obtained by the second component by processing a second instruction.

For example, the second component may convert a communication protocol format of the second instruction, to obtain the third instruction, or may convert a communication protocol format of second information included in the second instruction, to obtain the third information included in the third instruction.

In Manner 1, the second component can receive the second instruction sent by a first key tool or a second key tool, and then obtain the third instruction by processing the second instruction. The second instruction includes the second information associated with the shared key. The second information may be implemented in a plurality of manners. For details, refer to the implementation of the second information in the foregoing corresponding possible design in which the shared key filling instruction is the second instruction.

In Manner 1, the third instruction or the third information included in the third instruction can be better adapted to a communication protocol between the first component and the second component. The first component can fill the shared key according to the instruction (namely, the third instruction). The first component does not need to obtain the shared key filling instruction from the first key tool or the second key tool, to effectively improve filling efficiency of the shared key.

Manner 2: The third instruction is generated by the second component.

For example, the second component may generate the third instruction when a preset condition is met or a specific instruction is received. The shared key filling instruction includes the third instruction. For example, the shared key filling instruction is the third instruction.

The "specific instruction" may be any instruction, and the second component may use the instruction as a trigger signal. For example, the specific instruction may be a diagnostic command specially used to generate the shared key filling instruction, or may be a diagnostic command of another function, for example, an instruction of component flushing or component reset. In an optional design, the specific instruction may be from a diagnostic instrument, an entire-vehicle electric inspection test device, a cloud, or another component (for example, a telematics box (telematics box, TBOX) or a gateway (gate way, GW)) in the vehicle.

The preset condition includes but is not limited to that a device associated with the second component is started and a specific time point arrives.

It may be understood that "a device associated with the second component is started" may be that the second component is started or a device at which the second component is located is started. For example, the second component is A. In this case, when A is started or a device at which A is located is started, A may generate the third instruction. For another example, the second component is B. In this case, when B is started or a device at which B is located is started, B may generate the third instruction.

It may be understood that "a specific time point arrives" may be that a specified key filling time point (for example, 00:00 on the first day of each month) arrives or a preset day (for example, a previous day before key expiration) before key expiration arrives.

In Manner 2, the third information may be implemented in a plurality of manners. For example, the second component may generate a keying material (for example, the keying material is randomly generated or generated according to a specific rule), and use the keying material as the third information in the third instruction. For another example, the second component may generate the shared key (for example, the shared key is randomly generated or generated according to a specific rule), obtain a ciphertext of the shared key based on an initial key and the shared key, and use the ciphertext as the third information.

In Manner 2, the second component can generate the shared key filling instruction, to fill the shared key for another component (namely, the first component) in the vehicle. In this way, filling of the shared key no longer depends on a first key tool or a second key tool. This simplifies a filling procedure of the shared key.

In a possible design, the second component may receive a second instruction from a first key tool or a second key tool, where the second instruction includes second information associated with the shared key; and obtain the shared key based on an initial key and the second information. The second instruction may be used to fill the shared key for the second component. In this design, the second component can receive the shared key filling instruction from the first key tool, that is, the first key tool can be used to fill the initial key and the shared key. An operation of key filling of the second component can be simplified, and a design of a key tool used for key filling can also be simplified. Alternatively, according to the foregoing design, the second component can fill the shared key by using the second key tool different from the first key tool, to implement flexibility of filling of the initial key and the shared key.

It should be noted that there are a plurality of implementations in which the second component obtains the shared key based on the initial key and the second information, including but not limited to the following manners.

Manner 1: The second component obtains, according to a symmetric encryption algorithm or based on a key derivation function or a message authentication code of a symmetric encryption algorithm, the shared key based on the initial key and the second information.

In Manner 1, the second information can be used as a keying material. The second component generates, according to a specific key algorithm, the shared key based on the initial key and the second information, and does not need to transmit the shared key by using a key tool. In this way, another device cannot obtain the shared key of the second component, to effectively improve security of the shared key of the second component. In addition, Manner 1 has a low requirement on an algorithm of the second component. For example, the shared key can be obtained as long as the second component supports any symmetric encryption algorithm, any message authentication code according to a symmetric encryption algorithm, or any key derivation algorithm. This reduces implementation complexity and costs of the second component.

Manner 2: The second information includes information obtained by encrypting the shared key by using the initial key, and then the second component may obtain the shared key based on the initial key and the second information. For example, the second information is decrypted by using the initial key, to obtain the shared key.

In Manner 2, the second information includes a ciphertext of the shared key, and the ciphertext is the information obtained by encrypting the shared key by using the initial key. The second component can obtain the shared key based on the initial key and the ciphertext. However, for another device having no initial key, the shared key cannot be restored even if the ciphertext is received. This effectively improves security of the shared key of the second component. In addition, Manner 2 has a low requirement on an algorithm of the second component. For example, the shared key can be obtained as long as the second component supports any decryption algorithm. This reduces implementation complexity and costs of the second component. In another possible design, the second component may directly generate the shared key.

In a possible design, the second component may receive a first instruction from the first key tool. The first instruction includes first information associated with the initial key. The second component may obtain the initial key according to the first instruction. The initial key is at least used to generate the shared key, and the shared key is at least used to encrypt the data including the geographical location information.

For descriptions of the data of the geographical location information, refer to the related descriptions in the first aspect.

The first information may be implemented in a plurality of manners. Correspondingly, there are a plurality of implementations in which the second component obtains the initial key according to the first instruction, including but not limited to the following manners.

Manner 1: The first information includes a first ciphertext, and the first ciphertext includes information obtained by encrypting the initial key by using a first public key of the second component. Correspondingly, a process in which the second component obtains the initial key according to the first instruction may be: decrypting the first ciphertext based on a first private key of the second component, to obtain the initial key. The first private key corresponds to the first public key.

In Manner 1, the initial key is encrypted for transmission by using the first public key of the second component, so that the second component can decrypt the ciphertext of the initial key by using the first private key corresponding to the first public key, to obtain the initial key. In an optional design, the second component may generate the first public key and the first private key corresponding to the first public key, and send the first public key to the first key tool. The first key tool encrypts the initial key by using the first public key, to obtain the first ciphertext, and sends the first ciphertext to the second component. Because the second component has the first private key corresponding to the first public key, the second component can decrypt the first ciphertext based on the first private key, to obtain the initial key. Transmission of the initial key is implemented according to the asymmetric encryption algorithm, to effectively improve transmission security of the initial key.

Manner 2: The first information includes the initial key. Correspondingly, a process in which the second component obtains the initial key according to the first instruction may be: obtaining the initial key according to the first instruction in a wired connection manner.

In Manner 2, in the wired connection manner, the second component can directly receive the initial key, and the second component does not need to perform an encryption/decryption operation. Therefore, the second component having no encryption/decryption capability can also obtain the initial key, to ensure security of communication between different components. In addition, the initial key is obtained in this manner, to simplify an operation of the second component, and reduce component implementation complexity and component costs.

In a possible design, the second component may further send first response information to the first key tool. The first response information includes a filling result of the initial key. In this design, the first response information sent by the second component includes the filling result of the initial key, so that the first key tool can better monitor a key filling result of the second component.

The filling result of the initial key may indicate that the initial key is successfully filled or the initial key fails to be filled.

In a possible design, the filling result of the initial key includes: a first identifier, where the first identifier indicates that the initial key is successfully filled; and/or a third ciphertext, where the third ciphertext includes information obtained by encrypting, by using the initial key or a derived key of the initial key, a first random number included in the first instruction. In this design, the filling result of the initial key includes the first identifier and/or the third ciphertext, so that the first key tool can determine, based on the first identifier and/or the third ciphertext, whether the initial key is successfully filled.

In a possible design, the filling result of the initial key may include a second identifier. The second identifier may indicate that the initial key fails to be filled. In this design, the filling result of the initial key includes the second identifier, so that the first key tool can determine, based on the second identifier, that the initial key fails to be filled.

In a possible design, the filling result of the initial key may further include an identifier of the vehicle and/or an identifier of the second component. In this way, the first key tool can monitor a filling status of the initial key of the vehicle and/or the second component.

In a possible design, the second component may further send second response information in response to the second instruction. The second response information includes a filling result of the shared key.

The filling result of the shared key may indicate that the shared key is successfully filled or the shared key fails to be filled.

In a possible design, the filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction or a second random number included in the third instruction. In this design, the filling result of the shared key includes the first identifier and/or the third ciphertext, so that the first key tool can determine, based on the first identifier and/or the third ciphertext, whether the shared key is successfully filled.

In a possible design, the filling result of the shared key includes a fourth identifier. The fourth identifier may indicate that the shared key fails to be filled. In this design, the filling result of the shared key includes the fourth identifier, so that the first key tool can determine, based on the fourth identifier, that the shared key fails to be filled.

In a possible design, the filling result of the shared key may further include the identifier of the vehicle and/or the identifier of the second component. In this design, the first key tool or the second key tool can monitor a filling status of the shared key of the vehicle and/or the second component.

In a possible design, the second component may further receive a fourth instruction from the first key tool or a key detection tool, where the fourth instruction includes a third random number, and the fourth instruction is used to detect whether the shared key of the first component is abnormal; determine a first check value based on the third random number and the shared key; and send fourth response information, where the fourth response information includes the first check value. In this design, the second component receives the fourth instruction from the first key tool or the key detection tool, generates the first check value based on the random number included in the fourth instruction and the shared key of the second component, and returns the first check value to the first key tool or the key detection tool. In this way, the first key tool or the key detection tool can determine, based on the first check value, whether the shared key of the second component is consistent with a local shared key of the first key tool or the key detection tool, and then determine whether the shared key of the second component is abnormal. This helps the first key tool or the key detection tool monitor an abnormality of the shared key of the second component. When the abnormality exists, this can help ensure, through a subsequent operation, that the shared key of the second component is consistent with the local shared key of the first key tool or the key detection tool, thereby ensuring security of communication between the components of the vehicle.

In a possible design, the second component is further configured to receive a fifth instruction from the first key tool or the key detection tool. The fifth instruction includes a fifth random number, and the fifth instruction may be used to detect whether the initial key of the second component is abnormal. The second component is further configured to determine a third check value based on the fifth random number and the initial key. The second component is further configured to send fifth response information. The fifth response information includes the third check value. When the initial key is abnormal, this can help ensure, through a subsequent operation, that the initial key of the second component is consistent with a local initial key of the first key tool or the key detection tool, thereby ensuring security of the shared key determined subsequently based on the initial key.

According to a third aspect, an embodiment of this application further provides a key transmission method. The method may be performed by a first key tool. In the method, determining an initial key of a vehicle, where the initial key is at least used to generate a shared key, and the shared key is at least used to encrypt data including geographical location information; and sending a first instruction to a first component of the vehicle, where the first instruction includes first information associated with the initial key.

In this solution, the first key tool can transmit the first information associated with the initial key to the first component in the vehicle, so that the first component can obtain the initial key based on the first information. This can effectively improve key transmission security, so that the shared key generated based on the initial key cannot be obtained by another device, to effectively improve security performance of communication between components of the vehicle.

For specific descriptions of the shared key and the data of the geographical location information, refer to the related descriptions in any one of the first aspect or the possible designs of the first aspect.

In a possible design, the initial key is unrelated to an OEM, or is unrelated to an OEM having no navigation electronic map production qualification. The OEM herein is an OEM associated with the vehicle. In this design, an entire transmission process of the initial key does not require participation of the OEM associated with the vehicle, so that the initial key is invisible to the OEM, or does not require participation of the OEM having no navigation electronic map production qualification, so that the initial key is invisible to the OEM having no navigation electronic map production qualification. This can further improve key transmission security.

In a possible design, the initial key is related to an organization having a navigation electronic map production qualification. This can ensure security of the initial key, thereby ensuring transmission security of the geographical location information.

In a possible design, the initial key is different from an authentication key, and the authentication key is from the original equipment manufacturer OEM associated with the vehicle. The authentication key is at least used to generate at least one function key, and the at least one function key corresponds to at least one service function of the first component. In this design, a service related to the geographical location information can be implemented based on the initial key from the first key tool and the shared key generated by using the initial key. A service unrelated to the geographical location information can be implemented based on the authentication key from the OEM and the function key generated by using the authentication key. In this way, different keys can be used for the service related to the geographical location information and the service unrelated to the geographical location information, to further ensure transmission security of the data related to the geographical location information.

The authentication key is at least used to authenticate a function key of the vehicle. For example, the authentication key may be one of the following: a master ECU key (master ECU key, MEK), a pre-master ECU key (pre-master ECU key, PMEK), and a root key. This is not specifically limited in embodiments of this application.

In a possible design, the first information includes a first ciphertext. The first ciphertext includes information obtained by encrypting the initial key by using a first public key. The first public key is from the first component.

In a possible design, the first information includes the initial key. The sending a first instruction to a first component of the vehicle includes: sending the initial key to the first component in a wired connection manner.

In a possible design, a process in which the first key tool determines the initial key of the vehicle may be: generating a second public key and a second private key; sending request information to a key management system, where the request information requests the initial key, and the request information includes the second public key; and receiving a second ciphertext from the key management system, and determining the initial key based on the second ciphertext and the second private key. In this design, the first key tool can request the initial key from the key management system, and can receive the ciphertext of the initial key. This ensures security of obtaining the initial key by the first key tool.

In a possible design, the first key tool may further receive first response information from the first component. The first response information includes a filling result of the initial key.

In a possible design, if the filling result of the initial key indicates that the initial key fails to be filled, the first key tool may further resend the first instruction.

In a possible design, the filling result of the initial key includes a second identifier. The second identifier indicates that the initial key fails to be filled.

In a possible design, the filling result of the initial key may include: a first identifier, where the first identifier indicates that the initial key is successfully filled; and/or a third ciphertext, where the third ciphertext includes information obtained by encrypting, by using the initial key or a derived key of the initial key, a first random number included in the first instruction.

In a possible design, when the filling result of the initial key includes the third ciphertext, the first key tool may further determine, based on the third ciphertext, whether the initial key is successfully filled.

In a possible design, the filling result of the initial key may further include an identifier of the vehicle and/or an identifier of the first component.

In a possible design, if the filling result of the initial key indicates that the initial key is successfully filled, the first key tool may further send a second instruction to the first component. The second instruction includes second information associated with the shared key.

It should be noted that the second information may be implemented in a plurality of manners, including but not limited to the following implementations.

Manner 1: The first key tool generates the shared key (for example, the shared key is randomly generated or generated according to a specific rule), and obtains the second information based on the initial key and the shared key. For example, the first key tool may encrypt the shared key based on the initial key, to obtain the second information.

In Manner 1, the first key tool can generate the shared key, and obtain the second information based on the initial key and the shared key. In this way, the first component can obtain the shared key based on the initial key and a ciphertext of the shared key. However, for another device having no initial key, the shared key cannot be restored even if the ciphertext is received. This effectively improves security of the shared key of the first component. In addition, Manner 1 has a low requirement on an algorithm of the first component. For example, the shared key can be obtained as long as the first component supports any decryption algorithm. This reduces implementation complexity and costs of the first component.

Manner 2: The first key tool may generate a keying material (for example, the keying material is randomly generated or generated according to a specific rule), and use the keying material as the second information.

In Manner 2, the second information can be used as the keying material. In this way, the first component generates, according to a specific key algorithm, the shared key based on the initial key and the second information, and does not need to transmit the shared key by using the first key tool. The another device cannot obtain the shared key of the first component, to effectively improve security of the shared key of the first component. In addition, Manner 2 has a low requirement on an algorithm of the first component. For example, the shared key can be obtained as long as the first component supports any symmetric encryption algorithm, any message authentication code according to a symmetric encryption algorithm, or any key derivation algorithm. This reduces implementation complexity and costs of the first component.

In a possible design, the first key tool may further receive second response information from the first component. The second response information includes a filling result of the shared key.

In a possible design, the filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction.

In a possible design, when the filling result of the shared key includes the fourth ciphertext, the method further includes: The first key tool may further determine, based on the second information and the fourth ciphertext, whether the shared key is successfully filled. In this design, whether the shared key is successfully filled is verified by using the fourth ciphertext. This helps the first key tool accurately monitor a filling status of the shared key.

In a possible design, the filling result of the shared key may further include a fourth identifier. The fourth identifier indicates that the shared key fails to be filled.

In a possible design, if the filling result of the shared key indicates that the shared key fails to be filled, the first key tool may further resend the second instruction. In this design, a possibility of successfully filling the shared key can be effectively improved.

In a possible design, the filling result of the shared key may further include the identifier of the vehicle and/or the identifier of the first component.

In a possible design, the first key tool may further send a fourth instruction to the first component of the vehicle, where the fourth instruction includes a third random number; receive fourth response information from the first component, where the fourth response information includes a first check value, the first check value is associated with the third random number and the shared key of the vehicle, and the shared key is at least used to encrypt the data including the geographical location information; determine, based on the first check value, whether the shared key of the vehicle is consistent with a local shared key corresponding to the vehicle; and report abnormality information if the shared key of the vehicle is inconsistent with the local shared key. In the method, the first key tool performs communication interaction with the first component in the vehicle, to implement abnormality detection for the shared key of the vehicle. When an abnormality exists, this can help ensure, through a subsequent operation, that the shared key of the first component is consistent with a local shared key of the first key tool, thereby ensuring security of communication between the components of the vehicle.

In a possible design, the first key tool may further send a fifth instruction to the first component of the vehicle, where the fifth instruction includes a fifth random number; receive fifth response information from the first component, where the fifth response information includes a third check value, the third check value is associated with the fifth random number and the initial key of the vehicle, and the initial key is at least used to generate the shared key; determine, based on the third check value, whether the initial key of the vehicle is consistent with a local initial key corresponding to the vehicle; and report abnormality information if the initial key of the vehicle is inconsistent with the local initial key. In this design, the first key tool performs communication interaction with the first component in the vehicle, to implement abnormality detection for the initial key of the vehicle. When an abnormality exists, this can help ensure, through a subsequent operation, that the initial key of the first component is consistent with a local initial key of the first key tool, thereby ensuring security of the shared key determined subsequently based on the initial key.

According to a fourth aspect, an embodiment of this application further provides a key transmission method. The method may be performed by a second key tool. The method includes: determining a second instruction, and sending the second instruction to a first component in a vehicle. The second instruction includes second information associated with a shared key. The shared key is at least used to encrypt data including geographical location information. The second instruction is used to fill the shared key for the first component.

In this solution, the second key tool can transmit the second information associated with the shared key to the first component in the vehicle, so that the first component can obtain the shared key based on the second information and an initial key. This can effectively improve transmission security of the shared key, so that the shared key of the first component cannot be obtained by another device, to effectively improve security performance of communication between components of the vehicle.

For specific descriptions of the shared key and the data of the geographical location information, refer to the related descriptions in any one of the first aspect or the possible designs of the first aspect.

It should be noted that the second information may be implemented in a plurality of manners, including but not limited to the following implementations.

Manner 1: The second key tool generates the shared key (for example, the shared key is randomly generated or generated according to a specific rule), and obtains the second information based on the initial key and the shared key. For example, the second key tool may encrypt the shared key based on the initial key, to obtain the second information.

In Manner 1, the second key tool can generate the shared key, and obtain the second information based on the initial key and the shared key. In this way, the first component can obtain the shared key based on the initial key and a ciphertext of the shared key. However, for another device having no initial key, the shared key cannot be restored even if the ciphertext is received. This effectively improves security of the shared key of the first component. In addition, Manner 1 has a low requirement on an algorithm of the first component. For example, the shared key can be obtained as long as the first component supports any decryption algorithm. This reduces implementation complexity and costs of the first component.

Manner 2: The second key tool may generate a keying material (for example, the keying material is randomly generated or generated according to a specific rule), and use the keying material as the second information.

In Manner 2, the second information can be used as the keying material. In this way, the first component generates, according to a specific key algorithm, the shared key based on the initial key and the second information, and does not need to transmit the shared key by using the second key tool. The another device cannot obtain the shared key of the first component, to effectively improve security of the shared key of the first component. In addition, Manner 2 has a low requirement on an algorithm of the first component. For example, the shared key can be obtained as long as the first component supports any symmetric encryption algorithm, any message authentication code according to a symmetric encryption algorithm, or any key derivation algorithm. This reduces implementation complexity and costs of the first component.

Manner 3: The second key tool may request the shared key from a first key tool, and obtain the second information based on the initial key and the shared key. For example, the second key tool may encrypt the shared key based on the initial key, to obtain the second information.

In Manner 3, the shared key is managed by the first key tool, and the second key tool requests the shared key from the first key tool. In this way, the shared key is filled for the first component by using a plurality of key tools, so that the shared key is not easily obtained by another device. This effectively improves security of the shared key of the first component. In addition, Manner 3 has a low requirement on an algorithm of the first component. For example, the shared key can be obtained as long as the first component supports any decryption algorithm. This reduces implementation complexity and costs of the first component.

In a possible design, the second key tool may further receive second response information from the first component. The second response information includes a filling result of the shared key.

In a possible design, the filling result of the shared key includes: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction.

In a possible design, when the filling result of the shared key includes the fourth ciphertext, the second key tool may further determine, based on the second information and the fourth ciphertext, whether the shared key is successfully filled. In this design, whether the shared key is successfully filled is verified by using the fourth ciphertext. This helps the second key tool accurately monitor a filling status of the shared key.

In a possible design, if the filling result of the shared key indicates that the shared key fails to be filled, the second key tool may further resend the second instruction. In this design, a possibility of successfully filling the shared key can be effectively improved.

In a possible design, the filling result of the shared key includes a fourth identifier. The fourth identifier indicates that the shared key fails to be filled.

In a possible design, the filling result of the shared key may further include an identifier of the vehicle and/or an identifier of the first component. In this way, the second key tool can monitor a filling status of the shared key of the vehicle and/or the first component.

According to a fifth aspect, an embodiment of this application further provides a key detection method. The method may be performed by a key detection tool. The method includes: sending a fourth instruction to a first component of a vehicle, where the fourth instruction includes a third random number; receiving fourth response information from the first component, where the fourth response information includes a first check value, the first check value is associated with the third random number and a shared key of the vehicle, and the shared key is at least used to encrypt data including geographical location information; determining, based on the first check value, whether the shared key of the vehicle is consistent with a local shared key corresponding to the vehicle; and reporting abnormality information if the shared key of the vehicle is inconsistent with the local shared key.

In the method, the key detection tool performs communication interaction with the first component in the vehicle, to implement abnormality detection for the shared key of the vehicle. When an abnormality exists, this can help ensure, through a subsequent operation, that the shared key of the first component is consistent with a local shared key of the key detection tool, thereby ensuring security of communication between components of the vehicle.

For specific descriptions of the shared key and the data of the geographical location information, refer to the related descriptions in any one of the first aspect or the possible designs of the first aspect.

It should be noted that there are a plurality of implementations in which the key detection tool may determine, based on the first check value, whether the shared key of the vehicle is consistent with the local shared key corresponding to the vehicle, including but not limited to the following implementations.

Implementation 1: Calculate a second check value based on the local shared key and the third random number, and compare the first check value with the second check value. If the first check value is consistent with the second check value, determine that the local shared key of the vehicle is consistent with a current shared key of the vehicle. If the first check value is inconsistent with the second check value, determine that the local shared key of the vehicle is inconsistent with a current shared key of the vehicle. In Implementation 1, the key detection tool performs abnormality detection on the shared key by comparing consistency between the second check value determined by the key detection tool and the first check value determined by the first component. This can improve accuracy of key abnormality detection.

Implementation 2: Determine a fourth random number based on the received first check value and the local shared key, and then compare whether the fourth random number is consistent with the third random number. If the third random number is consistent with the fourth random number, determine that the local shared key of the vehicle stored in the key detection tool is consistent with a current shared key of the vehicle. If the third random number is inconsistent with the fourth random number, determine that the local shared key of the vehicle is inconsistent with a current shared key of the vehicle. In Implementation 2, the key detection tool performs abnormality detection on the shared key by comparing consistency between the fourth random number determined by the key detection tool based on the first check value and the third random number. This can improve accuracy of key abnormality detection.

In a possible design, the key detection tool may further send a fifth instruction to the first component of the vehicle, where the fifth instruction includes a fifth random number; receive fifth response information from the first component, where the fifth response information includes a third check value, the third check value is associated with the fifth random number and an initial key of the vehicle, and the initial key is at least used to generate the shared key; determine, based on the third check value, whether the initial key of the vehicle is consistent with a local initial key corresponding to the vehicle; and report abnormality information if the initial key of the vehicle is inconsistent with the local initial key. In this design, the key detection tool performs communication interaction with the first component in the vehicle, to implement abnormality detection for the initial key of the vehicle. When an abnormality exists, this can help ensure, through a subsequent operation, that the initial key of the first component is consistent with a local initial key of the key detection tool, thereby ensuring security of the shared key determined subsequently based on the initial key.

According to a sixth aspect, an embodiment of this application further provides another key detection method. The method may be performed by a key detection tool. The method includes: obtaining a communication information ciphertext of a first component of a vehicle, where the communication information ciphertext includes information obtained by encrypting first information by using a shared key of the vehicle, and the first information includes geographical location information; determining, based on a local shared key corresponding to the vehicle and the communication information ciphertext, whether the shared key of the vehicle is consistent with the local shared key; and reporting abnormality information if the shared key of the vehicle is inconsistent with the local shared key.

In the method, in the method, the key detection tool can obtain the communication information ciphertext of the first component, and implement abnormality detection for the shared key of the vehicle based on the communication information ciphertext. This helps discover a key abnormality of the vehicle in a timely manner. The key detection tool performs communication interaction with the first component in the vehicle, to implement abnormality detection for the shared key of the vehicle. When an abnormality exists, this can help ensure, through a subsequent operation, that the shared key of the first component is consistent with a local shared key of the key detection tool, thereby ensuring security of communication between components of the vehicle.

For specific descriptions of the shared key and data of the geographical location information, refer to the related descriptions in any one of the first aspect or the possible designs of the first aspect.

In a possible design, a process in which the key detection tool determines, based on the local shared key of the vehicle stored in the key detection tool and the communication information ciphertext, whether the shared key used by the vehicle is consistent with the local shared key may be: obtaining communication information based on the local shared key and the communication information ciphertext, determining whether the communication information is abnormal, and if the communication information is abnormal, determining that the shared key used by the vehicle is inconsistent with the local shared key, or if the communication information is normal, determining that the shared key used by the vehicle is consistent with the local shared key. For example, a process in which the key detection tool obtains the communication information based on the local shared key and the communication information ciphertext may be: decrypting the communication information ciphertext by using the local shared key, to obtain the communication information.

In a possible design, there are a plurality of implementations in which the key detection tool in the fifth aspect and the sixth aspect obtains the local shared key corresponding to the vehicle, including but not limited to the following manners.

Manner 1: Obtain an identifier of the vehicle or an identifier of the first component. Query, based on the identifier of the vehicle or the identifier of the first component, an initial key corresponding to the vehicle and a keying material used to generate the local shared key. Generate the local shared key based on the initial key and the keying material. In this way, the local shared key of the key detection tool has high real-time performance.

Manner 2: Obtain an identifier of the vehicle or an identifier of the first component. Query the local shared key based on the identifier of the vehicle or the identifier of the first component. In this way, the key detection tool can quickly obtain the local shared key, to improve key detection efficiency.

In a possible design, the key detection tool in the fifth aspect and the sixth aspect may further report the abnormality information to a qualification management organization, or report the abnormality information to a key management system. In some possible embodiments, the qualification management organization is an organization that has a surveying and mapping qualification and/or that engages in a surveying and mapping activity according to law.

According to a seventh aspect, an embodiment of this application provides a control apparatus, configured to implement the method performed by the first component in the first aspect.

For example, the apparatus may include:

a transceiver module, configured to receive a first instruction from a first key tool, where the first instruction includes first information associated with an initial key; and
a processing module, configured to obtain the initial key according to the first instruction, where the initial key is at least used to generate a shared key, and the shared key is at least used to encrypt data including geographical location information.

For specific descriptions of the shared key and the data of the geographical location information, refer to the related descriptions in any one of the first aspect or the possible designs of the first aspect.

For descriptions of other possible designs and related beneficial effects in the seventh aspect, refer to the first aspect and corresponding possible designs in the first aspect. Details are not described herein again.

According to an eighth aspect, an embodiment of this application provides another control apparatus, configured to implement the method performed by the second component in the second aspect.

For example, the apparatus may include:

a processing module, configured to obtain a shared key filling instruction, where the shared key filling instruction is used to fill a shared key for a first component, and the shared key is at least used to encrypt data including geographical location information; and
a transceiver module, configured to send the shared key filling instruction to the first component.

For specific descriptions of the shared key and the data of the geographical location information, refer to the related descriptions in any one of the first aspect or the possible designs of the first aspect.

For descriptions of other possible designs and related beneficial effects in the eighth aspect, refer to the second aspect and corresponding possible designs in the second aspect. Details are not described herein again.

According to a ninth aspect, an embodiment of this application provides a key transmission apparatus. The apparatus may be the first key tool in the third aspect.

For example, the apparatus may include:

a processing module, configured to determine an initial key of a vehicle, where the initial key is at least used to generate a shared key, and the shared key is at least used to encrypt data including geographical location information; and
a transceiver module, configured to send a first instruction to a first component of the vehicle, where the first instruction includes first information associated with the initial key.

For specific descriptions of the shared key and the data of the geographical location information, refer to the related descriptions in any one of the first aspect or the possible designs of the first aspect.

For descriptions of other possible designs and related beneficial effects in the ninth aspect, refer to the third aspect and corresponding possible designs in the third aspect. Details are not described herein again.

According to a tenth aspect, an embodiment of this application provides another key transmission apparatus. The apparatus may be the second key tool in the fourth aspect.

For example, the apparatus may include:

a processing module, configured to determine a second instruction; and
a transceiver module, configured to send the second instruction to a first component in a vehicle, where the second instruction includes second information associated with a shared key, the second instruction is used to fill the shared key for the first component, and the shared key is at least used to encrypt data including geographical location information.

For specific descriptions of the shared key and the data of the geographical location information, refer to the related descriptions in any one of the first aspect or the possible designs of the first aspect.

For descriptions of other possible designs and related beneficial effects in the tenth aspect, refer to the fourth aspect and corresponding possible designs in the fourth aspect. Details are not described herein again.

According to an eleventh aspect, an embodiment of this application provides a key detection apparatus, to implement the method performed by the key detection tool in the fifth aspect.

For example, the apparatus includes:

a transceiver module, configured to send a fourth instruction to a first component of a vehicle, where the fourth instruction includes a third random number; and
the transceiver module is further configured to receive fourth response information from the first component, where the fourth response information includes a first check value, the first check value is associated with the third random number and a shared key of the vehicle, and the shared key is at least used to encrypt data including geographical location information; and

a processing module, configured to: determine, based on the first check value, whether the shared key of the vehicle is consistent with a local shared key corresponding to the vehicle; and report abnormality information if the shared key of the vehicle is inconsistent with the local shared key.

For specific descriptions of the shared key and the data of the geographical location information, refer to the related descriptions in any one of the first aspect or the possible designs of the first aspect.

For other possible designs in the eleventh aspect, refer to corresponding possible designs in the fifth aspect. Details are not described herein again.

According to a twelfth aspect, an embodiment of this application further provides another key detection apparatus, to implement the method performed by the key detection tool in the sixth aspect.

For example, the apparatus includes:

a processing module, configured to obtain a communication information ciphertext of a first component of a vehicle, where the communication information ciphertext includes information obtained by encrypting first information by using a shared key of the vehicle, and the first information includes geographical location information; and

the processing module is further configured to determine, based on a local shared key corresponding to the vehicle and the communication information ciphertext, whether the shared key of the vehicle is consistent with the local shared key; and

a transceiver module, configured to report abnormality information if the shared key of the vehicle is inconsistent with the local shared key.

For specific descriptions of the shared key and data of the geographical location information, refer to the related descriptions in any one of the first aspect or the possible designs of the first aspect.

For other possible designs in the twelfth aspect, refer to corresponding possible designs in the sixth aspect. Details are not described herein again.

According to a thirteenth aspect, an embodiment of this application further provides an on-board component. The on-board component includes a processor and a storage medium. The storage medium stores instructions. When the instructions are run by the processor, the on-board component is enabled to perform the method according to any one of the first aspect or the possible designs of the first aspect, or the on-board component is enabled to perform the method according to any one of the second aspect or the possible designs of the second aspect.

According to a fourteenth aspect, an embodiment of this application further provides an electronic device. The electronic device includes a processor and a storage medium. The storage medium stores instructions. When the instructions are run by the processor, the electronic device is enabled to perform the method according to any one of the third aspect to the sixth aspect or the possible designs of the third aspect to the sixth aspect.

According to a fifteenth aspect, an embodiment of this application provides a chip system. The chip system includes a processor, configured to invoke a computer program or computer instructions stored in a memory, to enable the processor to perform the method according to any one of the first aspect or the possible designs of the first aspect, or to enable the processor to perform the method according to any one of the second aspect or the possible designs of the second aspect, or to enable the processor to perform the method according to any one of the third aspect or the possible designs of the third aspect, or to enable the processor to perform the method according to any one of the fourth aspect or the possible designs of the fourth aspect, or to enable the processor to perform the method according to any one of the fifth aspect or the possible designs of the fifth aspect, or to enable the processor to perform the method according to any one of the sixth aspect or the possible designs of the sixth aspect.

In a possible design, the processor is coupled to the memory through an interface.

In a possible design, the chip system further includes a memory. The memory stores the computer program or the computer instructions.

According to a sixteenth aspect, an embodiment of this application provides a computer-readable storage medium. The computer-readable storage medium stores a computer program or instructions. When the computer program or the instructions are executed, the method according to any one of the first aspect or the possible designs of the first aspect is performed, or the method according to any one of the second aspect or the possible designs of the second aspect is performed, or the method according to any one of the third aspect or the possible designs of the third aspect is performed, or the method according to any one of the fourth aspect or the possible designs of the fourth aspect is performed, or the method according to any one of the fifth aspect or the possible designs of the fifth aspect is performed, or the method according to any one of the sixth aspect or the possible designs of the sixth aspect is performed.

According to a seventeenth aspect, an embodiment of this application provides a computer program product. When the computer program product runs on one or more processors, the method according to any one of the first aspect or the possible designs of the first aspect is performed, or the method according to any one of the second aspect or the possible designs of the second aspect is performed, or the method according to any one of the third aspect or the possible designs of the third aspect is performed, or the method according to any one of the fourth aspect or the possible designs of the fourth aspect is performed, or the method according to any one of the fifth aspect or the possible designs of the fifth aspect is performed, or the method according to any one of the sixth aspect or the possible designs of the sixth aspect is performed.

According to an eighteenth aspect, an embodiment of this application provides a vehicle. The vehicle includes the first component in any one of the first aspect or the possible designs of the first aspect, and/or the second component in any one of the second aspect or the possible designs of the second aspect.

For beneficial effects of the seventh aspect to the eighteenth aspect, refer to the descriptions of the beneficial effects of the first aspect to the sixth aspect. Details are not described herein again.

## BRIEF DESCRIPTION OF DRAWINGS

FIG. 1 is a schematic diagram of an architecture of a possible system to which an embodiment of this application is applicable;

FIG. 2 is a schematic flowchart of generating a key tool according to an embodiment of this application;

FIG. 3 is a schematic flowchart of a key transmission method according to an embodiment of this application;

FIG. 4 is a schematic flowchart in which a key tool 200 requests an initial key from a key management system according to an embodiment of this application;

FIG. 5 is a schematic flowchart of transmitting a ciphertext of an initial key according to an embodiment of this application;

FIG. 6 is a schematic flowchart of another key transmission method according to an embodiment of this application;

FIG. 7 is a schematic flowchart of another key transmission method according to an embodiment of this application;

FIG. 8 is a schematic flowchart of a key detection method according to an embodiment of this application;

FIG. 9 is a schematic diagram of a structure of a control apparatus according to an embodiment of this application;

FIG. 10 is a schematic diagram of a structure of another control apparatus according to an embodiment of this application;

FIG. 11 is a schematic diagram of a structure of a key transmission apparatus according to an embodiment of this application;

FIG. 12 is a schematic diagram of a structure of another key transmission apparatus according to an embodiment of this application;

FIG. 13 is a schematic diagram of a structure of a key detection apparatus according to an embodiment of this application;

FIG. 14 is a schematic diagram of a structure of another key detection apparatus according to an embodiment of this application; and

FIG. 15 is a schematic diagram of a structure of a chip system according to an embodiment of this application.

## DESCRIPTION OF EMBODIMENTS

The following describes embodiments of this application with reference to the accompanying drawings in embodiments of this application. It should be noted that, in this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more than two. "At least one of the following items (pieces)" or a similar expression thereof means any combination of these items (pieces), including any combination of singular items (pieces) or plural items (pieces). For example, at least one of a, b, or c may represent a, b, c, (a and b), (a and c), (b and c), or (a, b, and c), where a, b, and c may be singular or plural. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in embodiments of this application are used to distinguish between a plurality of objects, but are not intended to limit an order, a time sequence, priorities, or importance of the plurality of objects. For example, first information and second information are merely intended to distinguish between different information, but do not indicate that the two types of information are different in content, priorities, a sending sequence, importance, or the like.

The following first describes technical terms used in embodiments of this application.

1. Component

The component is an electronic device having a key transmission function in a vehicle or a part (for example, a chip or an integrated circuit) in an electronic device. The electronic device may include a terminal device. For example, the component may be a vehicle cockpit (cockpit domain) device or a module (for example, a cockpit domain controller (cockpit domain controller, CDC)) in a vehicle cockpit device. For another example, the component may be an electronic control unit (electronic control unit, ECU). For still another example, the component may be a sensor. In embodiments of this application, the key transmission function includes receiving and/or sending data associated with a key. The data associated with the key includes but is not limited to the key, a ciphertext generated based on the key, information used to flush the key, information used to verify integrity of the key, information used to detect whether the key is abnormal, and information used to feed back a status of the key.

In some technical scenarios, a name of a device having a similar key transmission function in the vehicle may not be referred to as a component. However, for ease of description, electronic devices having the key transmission function in the vehicle are collectively referred to as components in embodiments of this application.

2. Key tool

The key tool is a software system or an electronic device having a key transmission function and/or a key detection function. The electronic device may be a terminal device, for example, various types of user equipment (user equipment, UE). In an optional design, the key tool may be an OEM diagnostic tool, an OEM diagnostic instrument, a dealer diagnostic instrument, a dealer diagnostic tool (tester tool), or an on-board diagnostics (on-board diagnostics, OBD) system. In some embodiments, the key tool may be used to implement one or more of the following functions: filling an initial key for a component in a vehicle, filling a shared key for the component in the vehicle, and detecting whether the shared key and the initial key of the component in the vehicle are abnormal. The key tool may be one or more key tools. This is not specifically limited in embodiments of this application.

3. Qualification management organization

The qualification management organization may be used to implement one or more of the following functions: allocating a key tool, evaluating a software security mechanism of a component supplier and/or an OEM of a vehicle, evaluating a hardware security mechanism of the component supplier and/or the OEM of the vehicle, evaluating a production environment of the component supplier and/or the OEM of the vehicle, and detecting or monitoring key usage during vehicle running. In some possible embodiments, the qualification management organization is an organization that has a surveying and mapping qualification and/or that engages in a surveying and mapping activity according to law.

4. Key management system

The key management system may be used to implement one or more of the following functions: managing generation of an initial key of a vehicle, managing distribution of the initial key, and managing storage of the initial key. In some possible embodiments, the key management system may be deployed in a qualification management organization, or may be deployed in a management system of an OEM.

5. Shared key

In embodiments of this application, the shared key may be used to encrypt communication information between different components in a vehicle, for example, encrypt geographical location information transmitted between the different components. In embodiments of this application, the shared key may be a key shared by all components in the vehicle, or may be a key shared by components associated with a function domain (for example, an intelligent driving domain) in the vehicle, or may be a key shared by components associated with a service in the vehicle. This is not specifically limited in embodiments of this application.

6. Initial key (seed)

In some embodiments, the initial key may be used as a keying material, and is used to generate a shared key. In some other embodiments, the initial key may be used to encrypt a shared key, to implement encrypted transmission of the shared key.

In some embodiments, an initial key of a vehicle is uniformly allocated by an OEM associated with the vehicle to a component supplier of each component in the vehicle, and then transferred by the component supplier to an employee of the component supplier in an offline manner (for example, an encrypted email or a file of an encrypted password). Finally, the employee of the component supplier imports the initial key into a component production line system and fills the initial key in a corresponding component. Therefore, the initial key may be disclosed by a person in a process of filling the initial key. A shared key is generated based on the initial key of the vehicle. Once the initial key is obtained by another device, security of the shared key cannot be ensured. In some cases, the OEM allocates a same initial key to all vehicles of a same vehicle type. Once the initial key is obtained by the another device, security of the shared key of all the vehicles of the same vehicle type is threatened. As a result, security of communication between different components of the vehicle is damaged. Therefore, how to securely transmit the initial key to improve security of communication between the different components is a technical problem that needs to be urgently resolved.

In view of this, embodiments of this application provide a key transmission method. The method may be performed by a first component in a vehicle and a first key tool. In the method, the first component may receive a first instruction from the first key tool. The first instruction includes first information associated with an initial key. Then, the first component may obtain the initial key according to the first instruction. The initial key may be at least used to generate a shared key, and the shared key may be at least used to encrypt data including geographical location information. In this way, key transmission security can be effectively improved, so that the shared key generated based on the initial key cannot be obtained by another device, to effectively improve security performance of communication between components of the vehicle, and protect the geographical location information associated with the component.

The following describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may know that, with evolution of the system architecture and emergence of a new service scenario, the technical solutions provided in this application are also applicable to a similar technical problem.

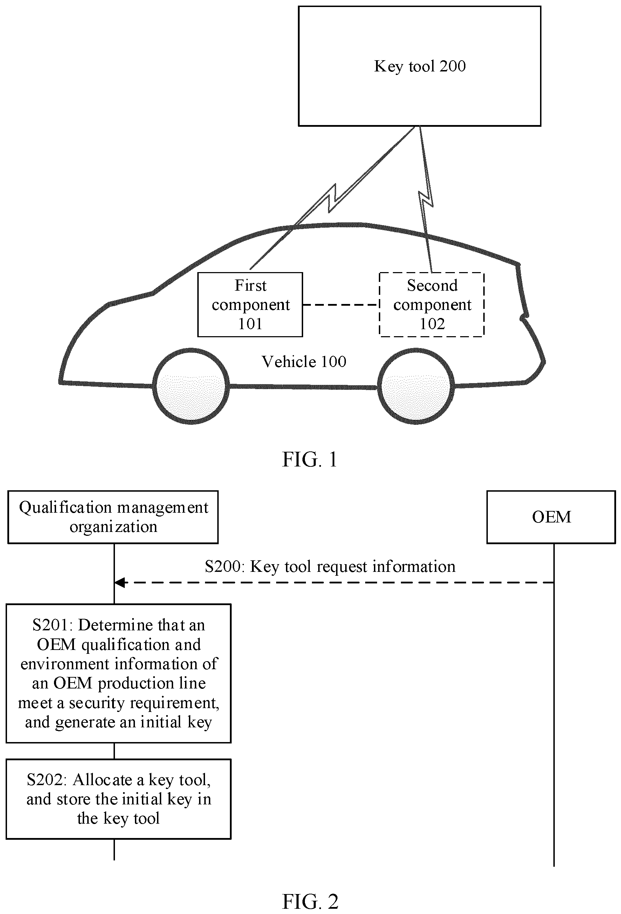

FIG. 1 is a schematic diagram of an architecture of a possible system according to an embodiment of this application. The system includes a key tool 200 and a vehicle 100. The vehicle 100 includes a first component 101. For example, the first component 101 may be an ECU, a domain controller, or a sensor in the vehicle 100. The key tool 200 has one or more of the following functions: a function 1, a function 2, a function 3, and a function 4.

The function 1 is an initial key filling function.

In a possible implementation, the key tool 200 may be used to determine an initial key of the vehicle 100, and send a first instruction to the first component 101. The first instruction includes first information associated with the initial key. Then, the first component 101 receives the first instruction, and may obtain the initial key based on the first information. The initial key may be used to generate a shared key, and the initial key is invisible to an OEM associated with the vehicle 100. The shared key may be used to encrypt communication information (for example, geographical location information) of the vehicle 100. In this way, the vehicle 100 effectively improves transmission security of the initial key, so that the initial key and the shared key generated based on the initial key cannot be obtained by another device, to effectively improve security of communication between components of the vehicle 100.

The function 2 is a shared key filling function.

In a possible implementation, the key tool 200 may send a second instruction to the first component 101 when the initial key is successfully filled for the first component 101. The second instruction includes second information associated with the shared key. Then, the first component 101 receives the second instruction, and may obtain the shared key based on the second information and the initial key. In this way, efficiency of obtaining the shared key by the first component 101 is effectively improved.

In an optional implementation, the vehicle 100 may further include a second component 102. The first component 101 and the second component 102 may perform communication interaction with each other, and the second component 102 and the key tool 200 may perform communication interaction with each other. In a possible implementation, the key tool 200 may alternatively send a second instruction to the second component 102, to fill the shared key for the second component 102. The second component 102 may convert the second instruction to obtain a third instruction, send the third instruction to the first component 101, and fill the shared key for the first component 101 by using the third instruction. In another possible implementation, after the key tool 200 sends the second instruction to the second component 102, the second component 102 may forward the second instruction to the first component 101, and fill the shared key for the first component 101 by using the second instruction. In this way, the key tool 200 does not need to perform communication interaction with the first component 101, and can also fill the shared key for the first component 101. This effectively improves efficiency of filling the shared key for a plurality of components in the vehicle 100.

It should be noted that the second component 102 is a component integrated in the entire vehicle, for example, may be an intelligent driving domain controller or a central gateway, and the first component 101 may be a single component in a component production line, and may be any on-board component. When the shared key is a shared key of the entire vehicle, the first component 101 and the second component 102 only need to belong to the vehicle 100. When the shared key is a function key of a specific service, the first component 101 and the second component 102 may be associated with a same service.

The function 3 is a function of detecting a key by using a random number.

In a possible implementation, the key tool 200 may send a fourth instruction to the first component 101. The fourth instruction includes a third random number. Then, the first component 101 receives the fourth instruction, and may generate a first check value based on the shared key of the vehicle 100 and the third random number, and return fourth response information including the first check value to the key tool 200. The key tool 200 determines, based on the first check value, whether the shared key used by the vehicle 100 is consistent with a local shared key that corresponds to the vehicle 100 and that is determined by the key tool 200, and reports abnormality information if the shared key used by the vehicle 100 is inconsistent with the local shared key stored in the key tool 200. In this way, the key tool 200 interacts with the first component 101, to detect the shared key of the vehicle 100.

In another possible implementation, the key tool 200 may be further used to detect the initial key of the vehicle. A detection process may be as follows: The key tool 200 may send a fifth instruction to the first component 101. The fifth instruction includes a fifth random number. Then, the first component 101 receives the fifth instruction, and may generate a third check value based on the fifth random number and the initial key of the vehicle 100, and return fifth response information including the third check value to the key tool 200. The key tool 200 determines, based on the third check value, whether the initial key used by the vehicle 100 is consistent with a local initial key that corresponds to the vehicle 100 and that is determined by the key tool 200, and reports abnormality information if the initial key used by the vehicle 100 is inconsistent with the local initial key stored in the key tool 200. In this way, the key tool 200 interacts with the first component 101, to detect the initial key of the vehicle 100.

The function 4 is a function of detecting the key by using a communication information ciphertext.

In a possible implementation, the key tool 200 may obtain a communication information ciphertext of the first component 101 of the vehicle 100. The communication information ciphertext includes information obtained by encrypting the first information by using the shared key of the vehicle 100. The first information includes the geographical location information. The key tool 200 determines whether the shared key of the vehicle 100 is consistent with a local shared key that corresponds to the vehicle 100 and that is determined by the key tool 200, and reports abnormality information if the shared key of the vehicle 100 is inconsistent with the local shared key of the vehicle 100. In this way, the key tool 200 can detect the shared key of the vehicle 100 only by obtaining the communication information ciphertext of the first component 101 in the vehicle 100. This effectively improves detection efficiency. In addition, due to randomness and/or real-time performance of the communication information ciphertext, through key detection implemented based on the communication information ciphertext, robustness of key detection can be further improved, and the shared key can be prevented from being forged.

It should be noted that the key tool 200 may be any one of a first key tool, a second key tool, and a key detection tool. The first key tool may have the function 1. Alternatively, in addition to the function 1, the first key tool may further have one or more of the following functions: the function 2, the function 3, and the function 4. The second key tool may have the function 2. The key detection tool may have the function 3 and/or the function 4. Key detection may specifically include detection of the initial key and/or the shared key.

Therefore, when the key tool 200 has the function 1, or when the key tool 200 has the one or more of the function 2, the function 3, and the function 4 in addition to the function 1, the key tool 200 may be the first key detection tool. When the key tool 200 has only the shared key filling function, the key tool 200 may be the second key detection tool. When the key tool 200 has only a key detection function, the key tool 200 may be the key detection tool. In addition, the key tool 200 may alternatively correspond to another key tool. The another key tool may have the function 2 and the function 3, or have the function 2 and the function 4, or have the function 2, the function 3, and the function 4.

In a possible implementation, the first key tool and the second key tool may correspond to different key filling environments. For example, the first key tool corresponds to a component supplier/component production line, that is, at the component supplier and/or in the component production line, the first key tool may be used to fill the initial key of the first component, or fill the initial key and the shared key of the first component. The second key tool corresponds to an OEM production line, that is, in the OEM production line, the second key tool may be used to fill the shared key of the first component. In this implementation, in the different key filling environments, different key tools are used to fill the initial key and the shared key of the first component. In this way, not only flexibility of key filling can be implemented, but also the key tools adapted to the different key filling environments can be implemented. This further ensures security of key filling in the different key filling environments, thereby improving security performance of communication between different components in the vehicle.

In another possible implementation, the first key tool and the second key tool may alternatively correspond to different components in the vehicle. For example, the first key tool corresponds to any component in the vehicle or a component that is in the vehicle and that participates in geographic information exchange. In this case, the first key tool may be used to fill the initial key or the initial key and the shared key for the any component in the vehicle or the component that is in the vehicle and that participates in geographic information exchange. The second key tool only corresponds to a main control component (for example, a software and hardware integrated platform, namely, a vehicle computing platform (vehicle computing platform), that is used to support intelligent driving, or a gateway) in the vehicle or a component associated with a specific function domain (for example, an intelligent driving domain or an HMI). In this case, the second key tool may be used to fill the shared key for the main control component in the vehicle or the component associated with the specific function domain. In this implementation, for the different components in the vehicle, different key tools are used to fill the initial key and/or the shared key. In this way, not only flexibility of key filling can be implemented, but also the key tools adapted to the different components in the vehicle can be implemented. This further ensures security of key filling of the different components in the vehicle, thereby improving security performance of communication between the different components in the vehicle.

In another possible implementation, the first key tool and the second key tool may alternatively correspond to different component suppliers. For example, the first key tool corresponds to a component supplier 1. In this case, the first key tool may be used to fill the initial key or the initial key and shared key for any component that is in the vehicle and that is associated with the component supplier 1. For example, the second key tool corresponds to a component supplier 2. In this case, the second key tool may be used to fill the shared key for any component that is in the vehicle and that is associated with the component supplier 2. In this implementation, for the different component suppliers, different key tools are used to fill the initial key and/or the shared key of the first component. In this way, not only flexibility of key filling can be implemented, but also the key tools adapted to the different component suppliers can be implemented. This further ensures security of key filling of the different component suppliers, thereby improving security performance of communication between different components in the vehicle.

It should be noted that the key tool 200 may be allocated by a qualification management organization to the OEM. For example, FIG. 2 shows a process in which a qualification management organization allocates a key tool to an OEM. The process includes the following steps.

S201: The qualification management organization determines that an OEM qualification and environment information of an OEM production line meet a security requirement, and generates an initial key.

The security requirement includes one or more of the following: a security requirement on a data protection mechanism of a component and an entire vehicle, a security requirement on a network environment of the production line, and a standardization requirement on a personnel management system.

S202: The qualification management organization allocates the key tool to the OEM, and stores the initial key in the key tool.

The key tool has an initial key filling function. In an optional design, the key tool further has a keying material generation function and/or a keying material filling function.

Optionally, the foregoing process may further include step S200, and step S200 is specifically as follows.

S200: The OEM sends key tool request information to the qualification management organization. Correspondingly, the qualification management organization receives the key tool request information. The key tool request information includes qualification information of the OEM, environment information of the OEM production line, and the type information of the vehicle. To be specific, when receiving the key tool request information of the OEM, the qualification management organization may verify related information of the OEM, and allocate the key tool to the OEM when verification succeeds. In this way, usage security of the key tool is effectively improved, to improve security of a key.

It should be understood that the key tool allocation process implemented based on FIG. 2 may also be used by the qualification management organization to allocate the key tool to a component supplier of the vehicle or another organization. This is not specifically limited in embodiments of this application.

It should be noted that, when the key tool 200 has different functions, corresponding key transmission methods of the key tool 200 are also different. With reference to a specific embodiment, the following describes the key transmission method provided in embodiments of this application.

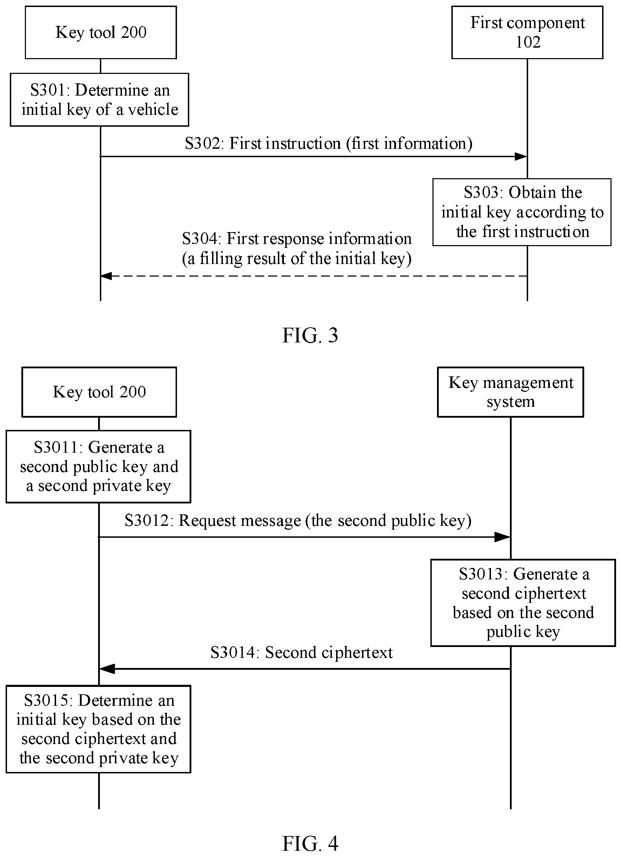

FIG. 3 is a schematic flowchart corresponding to a key transmission method according to an embodiment of this application. For example, execution bodies of the method are the key tool 200 and the first component 101 shown in FIG. 1. In FIG. 3, the key tool 200 has the foregoing function 1 (namely, an initial key filling function). It should be understood that, in this manner, the key tool 200 may be a first key tool. The method may include the following steps.

S301: The key tool 200 determines an initial key of the vehicle 100.

The initial key may be used to generate a shared key, and the shared key may be used to encrypt data including geographical location information.

The data of the geographical location information may include data related to one or more of the following: longitude and latitude, an elevation, and a geographical track. For example, the data of the geographical location information may include data whose longitude and latitude data range and/or elevation data range falls within a preset threshold range. Alternatively, the data of the geographical location information may be data related to a geographical location. This is not specifically limited in embodiments of this application. The elevation is a height of a point relative to a reference plane, for example, a height of the top of the vehicle relative to the ground. Correspondingly, elevation data includes data reflecting the height of the point relative to the reference plane, for example, data reflecting the height of the top of the vehicle relative to the ground.

There are a plurality of implementations in which the key tool 200 determines the initial key of the vehicle 100, including but not limited to the following manners.

Manner 1: The key tool 200 pre-stores the initial key of the vehicle 100, and the key tool 200 may locally query and determine the initial key of the vehicle 100 based on type information of the vehicle 100.

For example, still refer to FIG. 2. When allocating the key tool 200 to an OEM associated with the vehicle 100, the qualification management organization may store the initial key corresponding to the vehicle 100 in internal storage space of the key tool 200. Then, the key tool 200 may locally query the initial key of the vehicle 100 based on the type information of the vehicle 100. In embodiments of this application, the OEM associated with the vehicle may implement one or more of the following functions: developing the vehicle, integrating the vehicle, and generating the vehicle. Alternatively, the OEM associated with the vehicle may implement another function related to the vehicle. This is not specifically limited in embodiments of this application.

In Manner 1, the key tool 200 can quickly determine the initial key of the vehicle 100. This helps improve filling efficiency of the initial key.

Manner 2: The key tool 200 may request the initial key from a key management system.

In an optional design of Manner 2, the key tool 200 may be allocated by a qualification management organization to an OEM, but the qualification management organization does not pre-store the initial key in the key tool 200.

Example 1: FIG. 4 is a schematic flowchart in which the key tool 200 obtains the initial key from the key management system in Manner 2. A process includes the following steps.

S3011: The key tool 200 generates a second public key and a second private key.

In a possible implementation, the key tool 200 may generate the second public key and the second private key according to an asymmetric key algorithm. The asymmetric encryption algorithm may be an SM2 algorithm, an RSA algorithm, or the like. This is not specifically limited in embodiments of this application. In this manner, the key tool 200 does not need to pre-share same key information with the key management system. This simplifies a filling process of the initial key.

S3012: The key tool 200 sends request information to the key management system. Correspondingly, the key management system receives the request information.

The request information may request the initial key, and the request information includes the second public key. Then the key management system may perform S3013 in response to the request information.

S3013: The key management system generates a second ciphertext based on the second public key.

In a possible implementation, the key management system may encrypt the initial key of the vehicle 100 by using the second public key, to obtain the second ciphertext.

S3014: The key management system sends the second ciphertext. Correspondingly, the key tool 200 receives the second ciphertext.

S3015: The key tool 200 determines the initial key based on the second ciphertext and the second private key.

The second ciphertext includes information obtained by encrypting the initial key by using the second public key. Therefore, the key tool 200 may decrypt the second ciphertext by using the second private key, to obtain the initial key.

Example 2: The key tool 200 sends request information to the key management system. The request information may request the initial key, and the request information includes a preconfigured key. Then, the key management system receives the request information, and encrypts the initial key of the vehicle 100 in response to the request information based on the preconfigured key information, to obtain a second ciphertext. The key management system sends the second ciphertext to the key tool 200, and the key tool 200 determines the initial key based on the second ciphertext and the preconfigured key. In this way, the key tool 200 does not need to generate a temporary key. This reduces implementation complexity of the key tool 200.

In Manner 2, the key tool 200 can request the initial key from the key management system in real time, and the key management system can encrypt and transmit the initial key to the key tool 200. This effectively improves real-time performance and security of the initial key.

It should be understood that the key management system may be deployed in the qualification management organization, or may be deployed in a management system of the OEM. This is not specifically limited in embodiments of this application.

Manner 3: The key tool 200 generates the initial key of the vehicle 100.

For example, the key tool 200 may generate the initial key of the vehicle 100 based on information about the vehicle 100. The key tool 200 may generate the initial key of the vehicle 100 randomly or according to a specific rule. This is not specifically limited in embodiments of this application.

In Manner 3, the key tool 200 can generate the initial key of the vehicle 100 in real time. This can effectively ensure real-time performance of the initial key.

S302: The key tool 200 sends a first instruction to the first component 101 of the vehicle 100. Correspondingly, the first component 101 receives the first instruction.

The first instruction may include first information associated with the initial key. Therefore, the first instruction may be used to fill the initial key for the first component 101.

In an optional design, before S302, the key tool 200 sends a key filling instruction to the first component 101. The key filling instruction may be used to trigger filling of the initial key.

S303: The first component 101 obtains the initial key according to the first instruction.

It should be understood that a process in which the first component 101 obtains the initial key according to the first instruction is a process in which the first component 101 obtains the initial key based on the first information. The process in which the first component 101 determines the initial key based on the first information may be used as a part or all of the filling process of the initial key. In an optional implementation, the first component 101 the first component 101 obtains the initial key based on the first information, and filling of the initial key is completed. In another optional implementation, after obtaining the initial key, the first component 101 further needs to invoke a hardware security module (hardware security module, HSM) to locally store the initial key, and filling of the initial key is completed.

The first information may be implemented in a plurality of manners. Therefore, there are a plurality of implementations in which the first component 101 obtains the initial key based on the first information, including but not limited to the following manners.

Manner 1: The first information includes a first ciphertext. The first ciphertext includes information obtained by encrypting the initial key by using a first public key. The first component 101 may obtain the initial key based on the first ciphertext. In other words, the key tool 200 may transmit a ciphertext (namely, the first ciphertext) of the initial key to the first component 101. The key tool 200 may request the initial key from the key management system (for specific process descriptions, refer to FIG. 2).

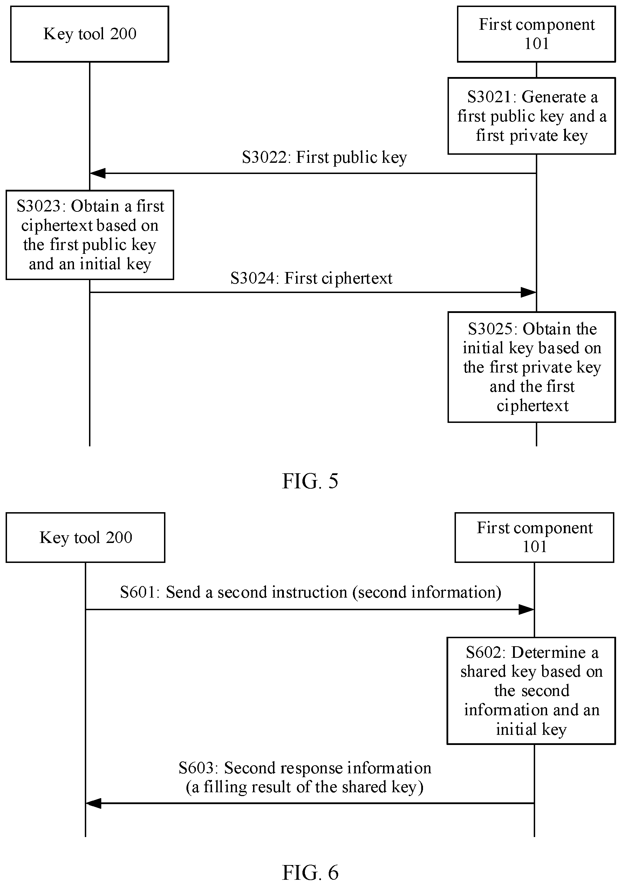

For example, FIG. 5 is a schematic flowchart of encrypting and transmitting the initial key in Manner 1. A process includes the following steps.

S3021: The first component 101 generates the first public key and a first private key.

In a possible implementation, the first component 101 may invoke the HSM to generate the first public key and the first private key. An algorithm used to generate the first public key and the first private key is not specifically limited in embodiments of this application. For example, the algorithm may be an asymmetric encryption algorithm (for example, the SM2 algorithm or the RSA algorithm) or another algorithm.

S3022: The first component 101 sends the first public key to the key tool 200. Correspondingly, the key tool 200 receives the first public key.

Alternatively, the first component 101 may send, to the key tool 200, a first public key encrypted by using a preconfigured key. For example, the preconfigured key may be an authentication key or another key shared between the first component and the key tool 200. In this way, transmission security of the first public key is effectively improved. Further, transmission security of the first ciphertext subsequently obtained by using the first public key is effectively improved.

S3023: The key tool 200 obtains the first ciphertext based on the first public key and the initial key.

In a possible implementation, the key tool 200 may encrypt the initial key based on the first public key, to generate the first ciphertext.

S3024: The key tool 200 sends the first ciphertext. Correspondingly, the first component 101 receives the first ciphertext.

S3025: The first component 101 obtains the initial key based on the first ciphertext and the first private key.

In a possible implementation, the first component 101 may decrypt the first ciphertext by using the first private key, to obtain the initial key.

Further, after obtaining the initial key, the first component 101 may further invoke the HSM, so that the HSM encrypts the initial key based on a local authentication key of the first component 101 and stores an encrypted initial key in the internal storage space of the first component 101, or directly stores the initial key in the internal storage space of the first component 101, to fill the initial key.

It should be understood that, in embodiments of this application, the authentication key is managed and maintained by the OEM, and may be used to authenticate a function key developed by the OEM or a component supplier. The authentication key may correspond to all entire vehicles included in one vehicle type, or may correspond to one entire vehicle, or may correspond to a functional component in an entire vehicle, or may correspond to an ECU in an entire vehicle.

For example, the authentication key may be a master ECU key (master ECU key, MEK), a pre-master ECU key (pre-master ECU key, PMEK) (which may also be referred to as an ECU initial hardware permission key), or a root key. This is not specifically limited in embodiments of this application. The root key is a preset key transferred by the OEM to the component supplier. The component supplier fills the preset key in a component in the vehicle. An entire-vehicle production line may fill the function key in the component in the vehicle depending on authentication and authorization of the preset key.

The function key is also referred to as a service key, and may be used to encrypt ECU keys of various functions in the entire vehicle. For example, the function key may include but is not limited to a pre-shared key (pre-shared key, PSK), a master key (master key, MK) used for a service application, and a session key (session key, SK). The PSK may include a secure on-board communication (security onboard communication, SecOC) key (SecOC key) used to protect communication security of an on-board network and a device key (device key) used for device authentication.

In Manner 1, the key tool 200 transmits the ciphertext of the initial key to the first component 101. This can ensure transmission security of the initial key.

Optionally, the first component 101 may further directly store the first ciphertext in the internal storage space of the first component 101, and when the initial key needs to be used, decrypt the first ciphertext to obtain the initial key.

Manner 2: The first information includes the initial key. In other words, the key tool 200 may transmit the initial key to the first component 101.

Correspondingly, a process in which the key tool 200 sends the first instruction to the first component 101 of the vehicle 100 may be as follows: The key tool 200 sends the initial key to the first component 101 in a wired connection manner. The key tool 200 and the first component 101 may be connected in a wired manner through a network cable, a data cable, or the like. This is not specifically limited in embodiments of this application.

In Manner 2, the key tool 200 can directly transmit the initial key to the first component 101 in the vehicle 100, so that the first component 101 can quickly obtain the initial key. In addition, in the wired connection manner, the first component 101 can directly receive the initial key, and the first component 101 does not need to perform an encryption/decryption operation. Therefore, a first component 101 having no encryption/decryption capability can also obtain the initial key, to ensure security of communication between different components. In addition, the initial key is obtained in this manner, to simplify an operation of the first component 101, and reduce implementation complexity and component costs of the first component 101.

In the embodiment shown in FIG. 3, the initial key is unrelated to the OEM associated with the vehicle 100, or is unrelated to neither the component supplier nor the OEM associated with the vehicle 100, or is unrelated to an OEM having no navigation electronic map production qualification (the OEM herein may be associated with the vehicle 100). In other words, an entire transmission process of the initial key does not require participation of the OEM associated with the vehicle 100 or the OEM having no navigation electronic map production qualification, so that the initial key is invisible to the OEM or the OEM having no navigation electronic map production qualification. This can effectively improve key transmission security, so that the shared key generated based on the initial key cannot be obtained by another device, to effectively improve security performance of communication between components of the vehicle 100, and protect data associated with the components.

Optionally, still refer to FIG. 3. The key transmission method provided in this embodiment of this application may further include step S304. Step S304 is specifically as follows.

S304: The first component 101 sends first response information. Correspondingly, the key tool 200 receives the first response information.

It should be understood that the first response information is response information sent by the first component 101 in response to the first instruction received from the key tool 200. The first response information may include a filling result of the initial key. The filling result of the initial key may indicate that the initial key is successfully filled or that the initial key fails to be filled.

In a possible implementation, the first instruction may include a first random number. Therefore, after receiving the first instruction, the first component 101 may obtain a third ciphertext based on the initial key and the first random number. For example, the first random number may be encrypted by using the initial key or a derived key of the initial key, to obtain the third ciphertext.

Correspondingly, for example, the filling result of the initial key may include a first identifier, where the first identifier may indicate that the initial key is successfully filled; and/or the third ciphertext. It may be understood that different information included in the filling result of the initial key indicates different scenarios in which the key tool 200 determines that the initial key is successfully filled.

Scenario 1

If the filling result of the initial key received by the key tool 200 includes the first identifier, the key tool 200 considers that the initial key is successfully filled.

Scenario 2

If the filling result of the initial key received by the key tool 200 includes the third ciphertext, the key tool 200 may determine, based on the third ciphertext, whether the initial key is successfully filled.

There are a plurality of implementations in which the key tool 200 determines, based on the third ciphertext, whether the initial key is successfully filled, including but not limited to the following manners.

Manner 1: After receiving the third ciphertext, the key tool 200 may obtain a second random number based on the initial key and the third ciphertext. For example, the key tool 200 may decrypt the third ciphertext by using the initial key, to obtain the second random number, and compare the second random number with the first random number included in the first instruction. If a value of the first random number is the same as a value of the second random number, the key tool 200 determines that the initial key is successfully filled. If a value of the first random number is different from a value of the second random number, the key tool 200 determines that the initial key fails to be filled.

Manner 2: The key tool 200 may obtain local verification information based on a local initial key and the first random number. For example, the key tool 200 may encrypt, by using the local initial key, the first random number included in the first instruction, to obtain a ciphertext 1 (namely, the local verification information), and compare the third ciphertext with the ciphertext 1. If a value of the third ciphertext is the same as a value of the ciphertext 1, the key tool 200 determines that the initial key is successfully filled. If a value of the third ciphertext is different from a value of the ciphertext 1, the key tool 200 determines that the initial key is unsuccessfully filled. Optionally, after receiving the third ciphertext, the key tool 200 may determine the local verification information based on the local initial key and the first random number.

Scenario 3

If the filling result of the initial key received by the key tool 200 includes the first identifier and the third ciphertext, the key tool 200 needs to determine again, based on the third ciphertext, whether the initial key is successfully filled.

It should be understood that, in some embodiments, after the first component 101 receives the first instruction, an initial key seed 2 obtained and stored based on the first information in the first instruction may not be completely stored. As a result, the initial key seed 2 stored in the first component 101 is different from a seed 1 to be filled by the key tool 200. Therefore, even if the filling result of the initial key received by the key tool 200 includes the first identifier, the key tool 200 still needs to determine again, based on the third ciphertext, whether the initial key is successfully filled.

A specific implementation in which the key tool 200 determines again, based on the third ciphertext, whether the initial key is successfully filled is similar to a specific implementation in which the key tool 200 determines, based on the third ciphertext, whether the initial key is successfully filled in Scenario 2. Refer to the foregoing descriptions. Details are not described herein again.

For another example, the filling result of the initial key may include a second identifier. The second identifier may indicate that the initial key fails to be filled. Optionally, the second identifier may further indicate a reason why the initial key fails to be filled, for example, the HSM in the first component 101 fails to decrypt the first ciphertext, or the storage space of the first component 101 is insufficient.

Optionally, the filling result of the initial key may further include an identifier of the vehicle 100 and/or an identifier of the first component 101. Correspondingly, the key tool 200 may count and store a filling status of the initial key based on the identifier of the vehicle 100 and/or the identifier of the first component 101.

To enable the initial key to be successfully filled, if the filling result of the initial key indicates that the initial key fails to be filled, the key tool 200 may resend the first instruction to the first component 101. Optionally, if a quantity of times of sending the first instruction exceeds a preset threshold, the key tool 200 stops sending the first instruction to the first component 101. In this implementation, filling validity of the initial key can be ensured.

In a possible implementation, if the filling result of the initial key indicates that the initial key is successfully filled, the key tool 200 may send a second instruction to the first component 101. The second instruction is used to fill the shared key for the first component 101.

The following describes, with reference to a specific example, a process in which the key tool 200 fills the shared key for the first component 101.

For example, refer to FIG. 6. In FIG. 6, the key tool 200 has the foregoing function 2, that is, the key tool 200 has the foregoing function 2 (namely, a shared key filling function). It should be understood that, in this manner, the key tool 200 may be a first key tool or a second key tool.

The process in which the key tool 200 fills the shared key for the first component 101 includes the following steps.

S601: The key tool 200 sends the second instruction. Correspondingly, the first component 101 receives the second instruction.

The second instruction includes second information associated with the shared key.

S602: The first component 101 determines the shared key based on the second information and the initial key.

It should be understood that a process in which the first component 101 determines the shared key based on the second information and the initial key may be a part or all of the filling process of the shared key. In an optional implementation, the first component 101 the first component 101 determines the shared key based on the second information and the initial key, and filling of the shared key is completed. In an optional implementation, after determining the shared key, the first component 101 invokes the HSM to locally store the shared key, and filling of the shared key is completed.

The second information may be implemented in a plurality of manners. Correspondingly, there are also a plurality of implementations in which the first component 101 determines the shared key based on the second information and the initial key, including but not limited to the following manners.

Manner 1: The second information is a keying material (for example, a salt). Therefore, after receiving the second instruction, the first component 101 may generate the shared key based on the second information and the initial key.

In a possible implementation, the process in which the first component 101 obtains the shared key based on the initial key and the second information may be: obtaining, according to a symmetric encryption algorithm or based on a key derivation function or a message authentication code of a symmetric encryption algorithm, the shared key based on the initial key and the second information.

For example, the first component 101 may obtain the shared key according to the following formula:

$$KEK = ENC(salt, seed)$$

Herein, KEK is the shared key, the salt is an example of the keying material, the seed is the initial key, and ENC is any symmetric encryption algorithm, the key derivation function, or the message authentication code based on the symmetric encryption algorithm. In the symmetric encryption algorithm, only one key is used, and both a sender and a receiver use the key to encrypt and decrypt data. The symmetric encryption algorithm may include but is not limited to a DES algorithm, a 3DES algorithm, an SM1 algorithm, and an SM4 algorithm. The message authentication code (message authentication code, MAC) is a technique used to verify integrity and perform authentication. The key derivation function is a function used to derive key data from a shared key bit string. The key derivation function includes but is not limited to a password-based key derivation function (password-based key derivation function, PBKDF) and a scrypt (scrypt) algorithm. In embodiments of this application, the symmetric encryption algorithm and the key derivation function are not specifically limited.

In Manner 1, the first component 101 can generate the shared key. This effectively improves filling security of the shared key.

Manner 2: The second information is a ciphertext of the shared key.

In a possible implementation, the shared key is generated by the key tool 200, and the key tool 200 may obtain the second information based on the initial key and the shared key. For example, the key tool 200 may encrypt the shared key by using the initial key, to obtain the second information. Correspondingly, after receiving the second instruction, the first component 101 may obtain the shared key based on the initial key and the second information. For example, the first component 101 may decrypt the second information by using the initial key, to obtain the shared key.

An algorithm used in a process in which the key tool 200 encrypts the shared key based on the initial key may be a symmetric encryption algorithm or a key derivation function. This is not specifically limited in embodiments of this application. For the symmetric encryption algorithm and the key derivation function, refer to the foregoing descriptions of the symmetric encryption algorithm and the key derivation function. Details are not described herein again.

In Manner 2, the second information includes the ciphertext of the shared key, and the ciphertext is the information obtained by encrypting the shared key by using the initial key. The first component 101 can obtain the shared key by decrypting the ciphertext by using the initial key. However, for another device having no initial key, the shared key cannot be restored even if the ciphertext is received. This effectively improves security of the shared key of the first component. In addition, Manner 2 has a low requirement on an algorithm of the first component 101. For example, the shared key can be obtained as long as the first component supports any decryption algorithm. This reduces implementation complexity and costs of the first component.

S603: The first component 101 sends second response information. Correspondingly, the key tool 200 receives the second response information.

It should be understood that the second response information is response information sent by the first component 101 in response to the second instruction received from the key tool 200. The second response information includes a filling result of the shared key. The filling result of the shared key may indicate that the initial key is successfully filled or that the initial key fails to be filled.

In a possible implementation, the second instruction may include a third random number. Therefore, after receiving the second instruction, the first component 101 may obtain a fourth ciphertext by using the third random number and the shared key or a derived key of the shared key. For example, the third random number is encrypted by using the shared key or the derived key of the shared key, to obtain the fourth ciphertext.

Correspondingly, in a possible implementation, the filling result of the shared key may include: a third identifier, where the third identifier indicates that the shared key is successfully filled; and/or a fourth ciphertext. It may be understood that different information included in the filling result of the shared key indicates different scenarios in which the key detection tool 200 determines that the shared key is successfully filled.

Scenario 1

If the filling result of the shared key received by the key tool 200 includes the third identifier, the key tool 200 considers that the shared key is successfully filled.

Scenario 2

If the filling result of the shared key received by the key tool 200 includes the fourth ciphertext, the key tool 200 may determine, based on the fourth ciphertext, whether the shared key is successfully filled.

There are a plurality of implementations in which the key tool 200 determines, based on the fourth ciphertext, whether the shared key is successfully filled, including but not limited to the following manners.

Manner 1: After receiving the fourth ciphertext, the key tool 200 may obtain a fourth random number based on the shared key and the fourth ciphertext. For example, the fourth ciphertext is decrypted by using the shared key, to obtain the fourth random number. The key tool 200 compares the fourth random number with the third random number included in the second instruction. If a value of the third random number is the same as a value of the fourth random number, the key tool 200 determines that the shared key is successfully loaded. If a value of the third random number is different from a value of the fourth random number, the key tool 200 determines that the shared key fails to be loaded.

Manner 2: After receiving the fourth ciphertext, the key tool 200 may obtain a local verification message based on a local shared key and the third random number. For example, the key tool 200 encrypts the third random number by using the local shared key, to obtain a ciphertext 2 (namely, the local verification information), and compares the fourth ciphertext with the ciphertext 2.

If a value of the fourth ciphertext is the same as a value of the ciphertext 2, the key tool 200 determines that the shared key is successfully filled. If a value of the fourth ciphertext is different from a value of the ciphertext 2, the key tool 200 determines that the shared key fails to be filled.

Scenario 3

If the filling result of the shared key received by the key tool 200 includes the third identifier and the fourth ciphertext, the key tool 200 needs to determine again, based on the fourth ciphertext, whether the shared key is successfully filled. It should be understood that, in some embodiments, after the first component 101 receives the second instruction, a shared key KEY 2 obtained and stored based on the first information in the second instruction may not be completely stored. As a result, the shared key KEY 2 stored in the first component 101 is different from a KEY 1 to be filled by the key tool 200. Therefore, even if the filling result of the shared key received by the key tool 200 includes the first identifier, the key tool 200 still needs to determine again, based on the fourth ciphertext, whether the initial key is successfully filled.

A specific implementation in which the key tool 200 determines again, based on the fourth ciphertext, whether the shared key is successfully filled is similar to a specific implementation in which the key tool 200 determines, based on the fourth ciphertext, whether the shared key is successfully filled in Scenario 2. Refer to the foregoing descriptions. Details are not described herein again.

In another possible implementation, the filling result of the shared key may include a fourth identifier. The fourth identifier may indicate that the shared key fails to be filled. Optionally, the second identifier may further indicate a reason why the shared key fails to be filled, for example, the HSM in the first component 101 fails in decryption, or the storage space of the first component 101 is insufficient.

Optionally, the filling result of the shared key may further include the identifier of the vehicle and/or the identifier of the first component 101. Correspondingly, the key tool 200 may count and store a filling status of the shared key based on the identifier of the vehicle 100 and/or the identifier of the first component 101.

In a possible implementation, if the filling result of the shared key indicates that the shared key fails to be filled, the key tool 200 may resend the second instruction. Optionally, when a quantity of times of sending the second instruction by the key tool 200 exceeds a preset threshold, the key tool 200 stops sending the second instruction to the first component 101. In this implementation, filling validity of the shared key can be ensured.

In the embodiment shown in FIG. 6, the key tool 200 can fill the shared key for the first component 101. This effectively improves security of the shared key of the first component 101.

It should be noted that, in some embodiments, the second component 102 in the vehicle 100 may alternatively fill the shared key for the first component 101.

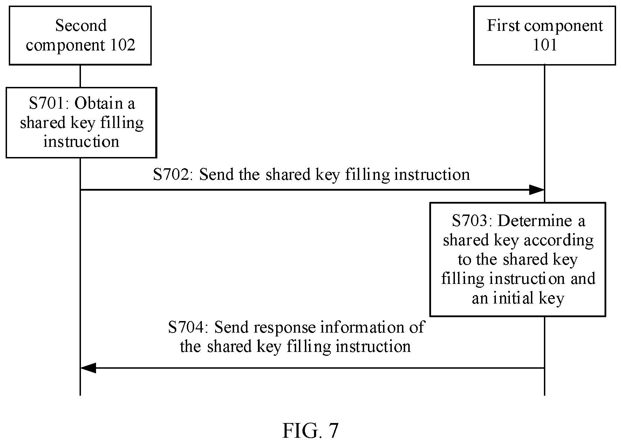

For example, FIG. 7 is a schematic flowchart in which the second component 102 fills the shared key for the first component 101. A process includes the following steps.

S701: The second component 102 obtains a shared key filling instruction. Obtaining may be understood as receiving or generating.

The shared key filling instruction includes information associated with the shared key. Therefore, the shared key filling instruction may be used to fill the shared key for the first component 101. The shared key is at least used to encrypt the data including the geographical location information. For specific descriptions of the shared key and the data of the geographical location information, refer to the foregoing related descriptions.

S702: The second component 102 sends the shared key filling instruction. Correspondingly, the first component 101 receives the shared key filling instruction.

The shared key filling instruction may be implemented in a plurality of manners, including but not limited to the following implementations.

Implementation 1: The shared key filling instruction may include a second instruction. For example, the shared key filling instruction is the second instruction. For another example, the shared key filling instruction includes other information in addition to the second instruction. The second instruction includes second information associated with the shared key.

For example, that the second component 102 determines the shared key filling instruction may be as follows: The second component 102 receives the second instruction from the key tool 200, and uses the second instruction as the shared key filling instruction. Correspondingly, the second component 102 may directly forward the first instruction from the key tool 200 to the first component 101.

In Implementation 1, the second component 102 can directly forward the second instruction from the key tool 200 to the first component, to fill the shared key for the first component 101. In this way, an operation procedure of the second component 102 can be simplified, and implementation is simple. In addition, the first component 101 does not need to obtain the shared key filling instruction from the key tool 200, to effectively improve filling efficiency of the shared key.

The second information may be implemented in a plurality of manners. For example, the key tool 200 generates a keying material (for example, the keying material is randomly generated or generated according to a specific rule), and uses the keying material as the second information in the second instruction. For another example, the key tool 200 may generate the shared key (for example, the shared key is randomly generated or generated according to a specific rule), obtain a ciphertext of the shared key based on the initial key and the shared key, and use the ciphertext as the second information. For still another example, the key tool 200 may encrypt the shared key by using the initial key, to obtain a ciphertext of the shared key, and use the ciphertext as the second information.

Implementation 2: The shared key filling instruction may include a third instruction. For example, the shared key filling instruction is the third instruction. For another example, the shared key filling instruction includes other information in addition to the third instruction. The third instruction includes third information associated with the shared key.

The third instruction may be implemented in a plurality of manners, including but not limited to the following implementations.

Manner 1: The second component 102 receives a second instruction from the key tool 200, and processes the second instruction, to obtain the third instruction.

For example, the second component 102 may convert a communication protocol format of the second instruction, to obtain the third instruction. Alternatively, the second component 102 may convert a communication protocol format of second information included in the second instruction, to obtain the third information included in the third instruction.

Correspondingly, the second component 102 may receive the second instruction sent by the key tool 200, and then obtain the third instruction by processing the second instruction. The second instruction includes the second information associated with the shared key. The second information may be implemented in a plurality of manners. For details, refer to the implementation of the second information in Implementation 1. Details are not described herein again.

In Manner 1, the third instruction or the third information included in the third instruction can be better adapted to a communication protocol between the first component and the second component 102. The first component 101 can fill the shared key according to the instruction (namely, the third instruction). The first component does not need to obtain the shared key filling instruction from the key tool 200, to effectively improve filling efficiency of the shared key.

Manner 2: The second component 102 generates the third instruction.

For example, when a preset condition is met or a specific instruction is received, the second component 102 may generate the third instruction, and use the third instruction as the shared key filling instruction.

The "specific instruction" may be any instruction, and the second component may use the instruction as a trigger signal. For example, the specific instruction may be a diagnostic command specially used to generate the shared key filling instruction, or may be a diagnostic command of another function, for example, an instruction of component flushing or component reset. In an optional design, the specific instruction may be from a diagnostic instrument, an entire-vehicle electric inspection test device, a cloud, or another component (for example, a TBOX or GW) in the vehicle.

The preset condition includes but is not limited to that a device associated with the second component is started and a specific time point arrives.

It may be understood that "a device associated with the second component is started" may be that the second component is started or a device at which the second component is located is started. For example, the second component is A. In this case, when A is started or a device at which A is located is started, A may generate the third instruction. For another example, the second component is B. In this case, when B is started or a device at which B is located is started, B may generate the third instruction.

It may be understood that "a specific time point arrives" may be that a specified key filling time point (for example, 00:00 on the first day of each month) arrives or a preset day (for example, a previous day before key expiration) before key expiration arrives.

Correspondingly, in Manner 2, the third information may be implemented in a plurality of manners. For example, the second component 102 may generate a keying material (for example, the keying material is randomly generated or generated according to a specific rule), and use the keying material as the third information in the third instruction. For another example, the second component 102 may generate the shared key (for example, the shared key is randomly generated or generated according to a specific rule), obtain a ciphertext of the shared key based on the initial key and the shared key, and use the ciphertext as the third information.

In Manner 2, the second component 102 can generate the shared key filling instruction, to fill the shared key for the another component (namely, the first component) in the vehicle. In this way, filling of the shared key no longer depends on a first key tool or a second key tool. This simplifies a filling procedure of the shared key.

S703: The first component 101 determines the shared key according to the shared key filling instruction and the initial key.

In a possible implementation, the shared key filling instruction may be the second instruction. The second instruction includes the second information associated with the shared key. Therefore, the first component 101 may determine the shared key based on the second information and the initial key. For an implementation in which the first component 101 determines the shared key based on the second information and the initial key, refer to the foregoing related descriptions. Details are not described herein again.

In another possible implementation, the shared key filling instruction may be the third instruction. The third instruction includes the third information associated with the shared key. Therefore, the first component 101 may determine the shared key based on the third information and the initial key. There are a plurality of implementations in which the first component 101 determines the shared key based on the third information and the initial key, including but not limited to the following manners.

Manner 1: The third information is a keying material (for example, a salt). Therefore, after receiving the third instruction, the first component 101 may generate the shared key based on the third information and the initial key.

In a possible implementation, a process in which the first component 101 obtains the shared key based on the initial key and the third information may be: obtaining, according to a symmetric encryption algorithm or based on a key derivation function or a message authentication code of a symmetric encryption algorithm, the shared key based on the initial key and the third information.

For example, the first component 101 may obtain the shared key according to the following formula:

$$KEK=ENC(salt, seed)$$

Herein, KEK is the shared key, the salt is an example of the keying material, the seed is the initial key, and ENC is any symmetric encryption algorithm, the key derivation function, or the message authentication code based on the symmetric encryption algorithm. For the symmetric encryption algorithm, the message authentication code based on the symmetric encryption algorithm, and the key derivation function, refer to the foregoing descriptions of the symmetric encryption algorithm and the key derivation function. Details are not described herein again.

In Manner 1, the first component 101 can generate the shared key. This effectively improves filling security of the shared key.

Manner 2: The third information is the ciphertext of the shared key.

In a possible implementation, the shared key is generated by the key tool 200, and the key tool 200 may obtain the third information based on the initial key and the shared key. For example, the key tool 200 may encrypt the shared key by using the initial key, to obtain the third information. Correspondingly, after receiving the third instruction, the first component 101 may obtain the shared key based on the initial key and the third information. For example, the key tool 200 may decrypt the third information by using the initial key, to obtain the shared key. An algorithm used in a process in which the key tool 200 encrypts the shared key based on the initial key may be a symmetric encryption algorithm or a key derivation function. This is not specifically limited in embodiments of this application. For the symmetric encryption algorithm and the key derivation function, refer to the foregoing descriptions of the symmetric encryption algorithm and the key derivation function. Details are not described herein again.

In Manner 2, the third information includes the ciphertext of the shared key, and the ciphertext is the information obtained by encrypting the shared key by using the initial key. The first component 101 can obtain the shared key by decrypting the ciphertext by using the initial key. However, for another device having no initial key, the shared key cannot be restored even if the ciphertext is received. This effectively improves security of the shared key of the first component. In addition, Manner 2 has a low requirement on an algorithm of the first component 101. For example, the shared key can be obtained as long as the first component supports any decryption algorithm. This reduces implementation complexity and costs of the first component.

S704: The first component 101 sends response information in response to the shared key filling instruction.

In a possible implementation, the shared key filling instruction is the second instruction, and the response information in response to the shared key filling instruction includes second response information in response to the second instruction. For descriptions of the second response information, refer to the foregoing related descriptions. Details are not described herein again.

In another possible implementation, the shared key filling instruction may be the third instruction, and the response information in response to the shared key filling instruction includes third response information in response to the third instruction. A specific implementation of the third response information is similar to that of the second response information. Refer to the foregoing descriptions of the second response information. Only the second response information needs to be replaced with the third response information. Details are not described herein again.

There are a plurality of implementations in which the first component 101 sends the third response information, including but not limited to the following implementations.

Implementation 1: The first component 101 may send third response information to the second component 102, and the second component 102 receives the third response information, and forwards the third response information to the key tool 200. In this implementation, the first component 101 does not need to interact with the key tool, and can feed back a filling result of the shared key to the key tool 200 by using the second component 102.

Implementation 2: The first component 101 may send the third response information to the second component 102, and the second component 102 receives the third response information, and may perform corresponding processing on the third response information.

Case 1: A process in which the second component 102 processes the third response information may be: converting a protocol format of the third response information, so that a processed protocol format of the third response information is adapted to a communication protocol between the second component 102 and the key tool 200.

Case 2: A process in which the second component 102 processes the third response information may be: determining a key filling status of the first component 101 based on the third response information. For example, whether the shared key of the first component 101 is successfully filled is verified based on identification information included in the third response information. Then, the second component 102 may send filling results of the shared key of all components in the vehicle 100 to the key tool 200. In this way, a calculation amount of the key tool 200 can be reduced, so that the key tool 200 can quickly learn a filling status of the shared key.

Implementation 3: The first component 101 may directly send the third response information to the key tool 200. In this implementation, the first component 101 interacts with the key tool 200, and the key tool 200 can quickly learn a filling status of the shared key of the first component 101.

In the embodiment shown in FIG. 7, the second component 102 fills the shared key for the first component 101, so that the first component 101 does not need to obtain the shared key filling instruction from the key tool 200. This can effectively improve filling efficiency of the shared key of the component in the vehicle.

It may be understood that, in a possible embodiment, after receiving the second instruction from the key tool 200, the second component 102 may alternatively obtain the shared key based on the initial key and the second information, to fill the shared key of the second component 102. An implementation in which "the second component 102 obtains the shared key based on the initial key and the second information" is similar to the implementation in which "the first component 101 obtains the shared key based on the initial key and the second information". Refer to the foregoing related descriptions of the implementation in which "the first component 101 obtains the shared key based on the initial key and the second information".

It may be understood that, in a possible embodiment, the second component 102 may receive a first instruction from the key tool 200, where the first instruction includes first information associated with the initial key; and the second component may obtain the initial key according to the first instruction. An implementation in which "the second component 102 obtains the initial key according to the first instruction" is similar to the implementation in which "the first component 101 and the second component 102 obtain the initial key according to the first instruction". Refer to the foregoing related descriptions. Only "the first component 101" needs to be replaced with "the second component 102".

In an optional design, before sending the first instruction to the second component 102, the key tool 200 may further send a key filling instruction to the second component 102. The key filling instruction may be used to trigger filling of the initial key.

To ensure normal use of a shared key or an initial key of a component in a vehicle, embodiments of this application further provide a key detection method. With reference to a specific example, the following describes in detail the key detection method provided in embodiments of this application.

**Embodiment 1**

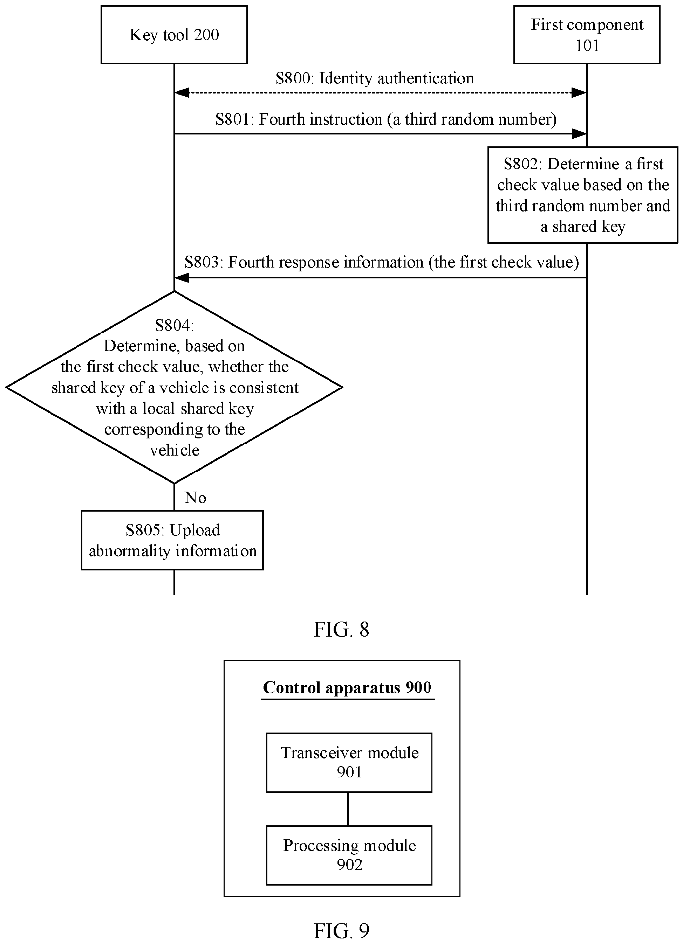

FIG. 8 is a schematic flowchart corresponding to a key detection method according to an embodiment of this application. For example, execution bodies of the method are the key tool 200 and the first component 101 shown in FIG. 1. In FIG. 8, the key tool 200 has the foregoing function 3 (namely, a function of detecting a key by using a random number). It should be understood that, in this manner, the key tool 200 may be a key detection tool. The key detection method includes the following steps.

S801: The key tool 200 sends a fourth instruction. Correspondingly, the first component 101 receives the fourth instruction.

The fourth instruction is used to detect whether a shared key of the vehicle 100 is abnormal. The shared key is at least used to encrypt data including geographical location information. For the data of the geographical location information, refer to the foregoing descriptions of the data of the geographical location information data. Details are not described herein again.

In a possible implementation, the fourth instruction includes a third random number.

Optionally, before sending the fourth instruction, the key tool 200 may further perform S800, namely, verifying an identity of the first component 101 based on an identifier of the first component 101 or an identifier of the vehicle associated with the first component 101.

For example, the key tool 200 may verify the identity of the first component 101 by using a security protocol having an identity authentication capability, for example, a transport layer security (transport layer security, TLS) protocol.

S802: The first component 101 determines a first check value based on the third random number and the shared key.

For example, the first component 101 may determine a first check value C according to the following formula:

$$C = ENC(Rand3, KEK)$$

Herein, ENC is any symmetric encryption algorithm (for example, SM4) or a message authentication code (for example, a cipher-based message authentication code (cipher-based message authentication code, CMAC)) based on a symmetric encryption algorithm, Rand3 is the third random number, and KEK is the shared key of the vehicle. For the symmetric encryption algorithm, the message authentication code based on the symmetric encryption algorithm, and a key derivation function, refer to the foregoing descriptions of the symmetric encryption algorithm, the message authentication code based on the symmetric encryption algorithm, and the key derivation function. Details are not described herein again.

S803: The first component 101 sends fourth response information. Correspondingly, the key tool 200 receives the fourth response information.

The fourth response information includes the first check value. The first check value may be used to determine whether the shared key is consistent with a local shared key of the key tool 200.

S804: The key tool 200 determines, based on the first check value, whether the shared key of the vehicle is consistent with a local shared key corresponding to the vehicle.

In a possible implementation, a process in which the key tool 200 determines, based on the first check value, whether the shared key of the vehicle is consistent with the local shared key corresponding to the vehicle may be as follows: The key tool 200 calculates a second check value based on the local shared key and the third random number, and compares the first check value with the second check value. If the first check value is consistent with the second check value, the local shared key of the vehicle stored in the key tool 200 is consistent with a current shared key of the vehicle. If the first check value is inconsistent with the second check value, the local shared key of the vehicle stored in the key tool 200 is inconsistent with a current shared key of the vehicle. In this implementation 1, the key tool 200 performs abnormality detection on the shared key by comparing consistency between the second check value determined by the key tool 200 and the first check value determined by the first component. This can improve accuracy of key abnormality detection.

For example, the key tool 200 may obtain the second check value according to the following formula:

$$C'=ENC(Rand3, KEK1)$$

Herein, C' is the second check value, ENC is any symmetric encryption algorithm (for example, SM4) or a message authentication code (for example, a CMAC) based on a symmetric encryption algorithm, Rand3 is the third random number, and KEK1 is the local shared key. For the symmetric encryption algorithm, the message authentication code based on the symmetric encryption algorithm, and a key derivation function, refer to the foregoing descriptions of the symmetric encryption algorithm, the message authentication code based on the symmetric encryption algorithm, and the key derivation function. Details are not described herein again.

In another possible implementation, a process in which the key tool 200 determines, based on the first check value, whether the shared key of the vehicle is consistent with the local shared key corresponding to the vehicle may be as follows: The key tool 200 may determine a fourth random number based on the received first check value and the local shared key, and then compare whether the fourth random number is consistent with the third random number. If the third random number is consistent with the fourth random number, the local shared key of the vehicle stored in the key tool 200 is consistent with a current shared key of the vehicle. If the third random number is inconsistent with the fourth random number, the local shared key of the vehicle stored in the key tool 200 is inconsistent from a current shared key of the vehicle. In this implementation 2, the key tool 200 performs abnormality detection on the shared key by comparing consistency between the fourth random number determined by the key tool 200 based on the first check value and the third random number. This can improve accuracy of key abnormality detection.

There are a plurality of implementations in which the key tool 200 obtains the local shared key, including but not limited to the following manners.

Manner 1: Obtain the identifier of the vehicle or the identifier of the first component 101. Query, based on the identifier of the vehicle or the identifier of the first component 101, an initial key corresponding to the vehicle and a keying material used to generate the local shared key. Generate the local shared key based on the initial key and the keying material. In this way, the local shared key of the key detection tool has high real-time performance.

Manner 2: Obtain the identifier of the vehicle or the identifier of the first component 101. Query the local shared key based on the identifier of the vehicle or the identifier of the first component 101. In this way, the key detection tool can quickly obtain the local shared key, to improve key detection efficiency.

S805: The key tool 200 reports abnormality information if the shared key of the vehicle is inconsistent with the local shared key.

In a possible implementation, the key tool 200 may report the abnormality information to a qualification management organization, or report the abnormality information to a key management system. The qualification management organization is an organization that has a surveying and mapping qualification and/or that engages in a surveying and mapping activity according to law.

In the embodiment shown in FIG. 8, the key tool 200 performs communication interaction with the first component 101 in the vehicle, to implement abnormality detection for the shared key of the vehicle, so that abnormality detection for the shared key of the vehicle is more accurate.

In a possible embodiment, when the shared key is filled for the first component 101 by using the second component 102, when detecting a key of the vehicle, the key tool 200 may detect an initial key of the first component 101, or may detect an initial key of the second component 102.

**Embodiment 2**

The key tool 200 has the foregoing function 4 (namely, a function of detecting a key by using a communication information ciphertext). It should be understood that, in this manner, the key tool 200 may be a key detection tool. In this manner, an embodiment of this application provides another key detection method. The method includes the following steps.

A: The key tool 200 obtains communication information ciphertext of the first component 101 of the vehicle.

The communication information ciphertext includes information obtained by encrypting first information by using a shared key of the vehicle 100. The first information includes geographical location information. For data of the geographical location information, refer to the foregoing descriptions of the data of the geographical location information data. Details are not described herein again.

B: The key tool 200 determines, based on a local shared key of the vehicle 100 stored in the key tool 200 and the communication information ciphertext, whether the shared key currently used by the vehicle 100 is consistent with the local shared key.

The shared key of the vehicle 100 may be a shared key of all components in the vehicle 100, or may be a shared key of a component associated with a function domain in the vehicle 100. This is not limited in embodiments of this application.

In a possible implementation, the key tool 200 may obtain the local shared key of the vehicle, decrypt the communication information ciphertext by using the local shared key of the vehicle, to obtain decrypted communication information, and determine whether the communication information is abnormal. If the communication information is abnormal, the key tool 200 determines that the shared key of the vehicle is inconsistent with the local shared key of the vehicle. If the communication information is normal, the key tool 200 determines that the shared key of the vehicle is consistent with the local shared key of the vehicle.

For example, the communication information is the geographical location information. If a current location of a to-be-detected vehicle is a geographical location 1, geographical location information obtained by the key tool 200 by decrypting the obtained communication information ciphertext is a geographical location 2, and the geographical location 1 does not match the geographical location 2, it is determined that a shared key of the to-be-detected vehicle is inconsistent with the local shared key of the key tool 200, and abnormality information is reported. There are a plurality of cases in which the geographical location 1 does not match the geographical location 2. The case may be that longitude and latitude data of the geographical location 1 does not match that of the geographical location 2. Alternatively, the case may be that elevation data of the geographical location 1 does not match that of the geographical location 2.

For another example, the communication information is the geographical location information. Geographical location information obtained by the key tool 200 by decrypting the obtained communication information ciphertext is a geographical location 2, and a longitude and latitude data range of the geographical location 2 exceeds a preset threshold range. In this case, it is determined that a shared key of a to-be-detected vehicle is inconsistent with the local shared key of the key tool 200, and abnormality information is reported.

For still another example, the communication information is the geographical location information. Geographical location information obtained by the key tool 200 by decrypting the obtained communication information ciphertext is a geographical location 2, and an elevation data range of the geographical location 2 exceeds a preset threshold range. In this case, it is determined that a shared key of a to-be-detected vehicle is inconsistent with the local shared key of the key tool 200, and abnormality information is reported. Abnormality information is reported if the shared key of the vehicle is inconsistent with the local shared key.

The key tool 200 may report the abnormality information to a qualification management organization, or report the abnormality information to a key management system. This is not specifically limited in embodiments of this application.

In this embodiment, the key detection tool can automatically obtain the communication information ciphertext of the first component 101, and implement abnormality detection for the shared key of the vehicle based on the communication information ciphertext. This helps discover a key abnormality of the vehicle in a timely manner.

In a possible embodiment, when the shared key is filled for the first component 101 by using the second component 102, when detecting a key of the vehicle, the key tool 200 may detect an initial key of the first component 101, or may detect an initial key of the second component 102.

It should be noted that the initial key in the foregoing embodiment is different from an authentication key, and the authentication key is from an OEM associated with the vehicle. In some possible embodiments, the first component 101 may further determine at least one function key based on the authentication key. The at least one function key corresponds to at least one service function.

In this way, the first component may further determine, based on the authentication key from the OEM, a function key used to implement a service function of the first component, so that the service function of the first component can be securely performed, to effectively improve data security of the vehicle. In addition, according to this design, a service related to the geographical location information can be implemented based on an initial key from a first key tool and a shared key generated by using the initial key. A service unrelated to the geographical location information can be implemented based on the authentication key from the OEM and the function key generated by using the authentication key. In this way, different keys can be used for the service related to the geographical location information and the service unrelated to the geographical location information, to further ensure transmission security of data related to the geographical location information.

The foregoing describes the key transmission method and the key detection method provided in embodiments of this application. The following describes an apparatus in embodiments of this application.

FIG. 9 is a schematic diagram of a possible structure of a control apparatus according to an embodiment of this application. The apparatus 900 may be configured to perform a function of the first component 91.

For example, the apparatus 900 includes:

a transceiver module 901, configured to receive a first instruction from a first key tool, where the first instruction includes first information associated with an initial key; and
a processing module 902, configured to obtain the initial key according to the first instruction, where the initial key is at least used to generate a shared key, and the shared key is at least used to encrypt data including geographical location information.

For data of the geographical location information, refer to the foregoing descriptions of the data of the geographical location information data. Details are not described herein again.

The shared key may be a shared key of all components in a vehicle, or may be a shared key of a component associated with a function domain in a vehicle. This is not limited in embodiments of this application.

It should be understood that the initial key is unrelated to an original equipment manufacturer OEM associated with the vehicle, or is unrelated to neither a component supplier nor an OEM associated with the vehicle 100, or is unrelated to an OEM having no navigation electronic map production qualification (the OEM herein may be associated with the vehicle 100). In other words, an entire transmission process of the initial key does not require participation of the OEM associated with the vehicle or the OEM having no navigation electronic map production qualification, so that the initial key is invisible to the OEM or the OEM having no navigation electronic map production qualification. This can further improve key transmission security. In this way, a service related to the geographical location information can be implemented based on the initial key from the first key tool and the shared key generated by using the initial key. A service unrelated to the geographical location information can be implemented based on an authentication key from the OEM and a function key generated by using the authentication key. Therefore, different keys can be used for the service related to the geographical location information and the service unrelated to the geographical location information, to further ensure transmission security of the data related to the geographical location information.

In a possible implementation, the initial key is different from an authentication key, and the authentication key is from the OEM associated with the vehicle. The processing module 902 may be further configured to determine at least one function key based on the authentication key. The at least one function key corresponds to at least one service function of a first component.

The first information may be implemented in a plurality of manners, including but not limited to the following manners.

Manner 1: The first information includes a first ciphertext, and the first ciphertext includes information obtained by encrypting the initial key by using a first public key of the first component. Correspondingly, the processing module 902 is further configured to decrypt the first ciphertext based on a first private key of the first component, to obtain the initial key. The first private key corresponds to the first public key.

Manner 2: The first information includes the initial key. Correspondingly, the processing module 902 is further configured to obtain the initial key according to the first instruction in a wired connection manner.

In a possible implementation, the transceiver module 901 is further configured to send first response information to the first key tool. The first response information includes a filling result of the initial key. The filling result of the initial key may indicate that the initial key is successfully filled or the initial key fails to be filled.

In a possible implementation, the filling result of the initial key may include: a first identifier, where the first identifier indicates that the initial key is successfully filled; and/or a third ciphertext, where the third ciphertext includes information obtained by encrypting, by using the initial key or a derived key of the initial key, a first random number included in the first instruction. In this implementation, the filling result of the initial key includes the first identifier and/or the third ciphertext, so that the first key tool can determine, based on the first identifier and/or the third ciphertext, whether the initial key is successfully filled.

In a possible implementation, the filling result of the initial key may include a second identifier. The second identifier may indicate that the initial key fails to be filled.

In a possible implementation, the filling result of the initial key may further include an identifier of the vehicle and/or an identifier of the first component.

In a possible implementation, the transceiver module 901 is further configured to receive a second instruction from the first key tool or a second key tool. The second instruction includes second information associated with the shared key. The processing module 902 is further configured to obtain the shared key based on the initial key and the second information. The second instruction may be used to fill the shared key for the first component.

In a possible implementation, the first key tool and the second key tool may correspond to different key filling environments. For a specific example and beneficial effects, refer to the foregoing descriptions of the first key tool and the second key tool.

In another possible implementation, the first key tool and the second key tool may alternatively correspond to different components in the vehicle. For a specific example and beneficial effects, refer to the foregoing descriptions of the first key tool and the second key tool.

In another possible implementation, the first key tool and the second key tool may alternatively correspond to different component suppliers. For a specific example and beneficial effects, refer to the foregoing descriptions of the first key tool and the second key tool.

It should be noted that there are a plurality of implementations in which the processing module 902 obtains the shared key based on the initial key and the second information, including but not limited to the following manners.

Manner 1: The processing module 902 obtains, according to a symmetric encryption algorithm or based on a key derivation function or a message authentication code of a symmetric encryption algorithm, the shared key based on the initial key and the second information.

For specific descriptions of the symmetric encryption algorithm, the message authentication code based on the symmetric encryption algorithm, and the key derivation function, refer to the foregoing descriptions of the symmetric encryption algorithm, the message authentication code based on the symmetric encryption algorithm, and the key derivation function. Details are not described herein again.

Manner 2: The second information includes information obtained by encrypting the shared key by using the initial key, and therefore the first component may obtain the shared key based on the initial key and the second information. For example, the second information is decrypted by using the initial key, to obtain the shared key.

In a possible implementation, the second component is at least configured to distribute key information from the first key tool. In this way, the first key tool only needs to communicate with the second component, and does not need to perform communication interaction with another component in the vehicle. This effectively improves filling efficiency of the shared key of all the components in the vehicle.

Correspondingly, in a possible implementation, the processing module 902 is further configured to obtain, according to a symmetric encryption algorithm or based on a key derivation function or a message authentication code of a symmetric encryption algorithm, the shared key based on the initial key and third information. In this implementation, the shared key of the first component is not easily obtained by another device, so that security of the shared key is high.

In another possible implementation, third information includes information obtained by encrypting the shared key by using the initial key. The processing module 902 is further configured to decrypt the third information by using the initial key, to obtain the shared key. In this implementation, efficiency of obtaining the shared key by the first component is high.

In a possible implementation, the transceiver module 901 may further send second response information in response to the second instruction. The second response information includes a filling result of the shared key. The first component may send the second response information to the first key tool or the second key tool. This is not specifically limited in embodiments of this application.

In a possible implementation, the transceiver module 901 may further send third response information in response to a third instruction. The third response information includes a filling result of the shared key. The first component may send the third response information to the first key tool or the second component. This is not specifically limited in embodiments of this application.

In a possible implementation, the filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction or a second random number included in the third instruction.

In a possible implementation, the filling result of the shared key includes a fourth identifier. The fourth identifier may indicate that the shared key fails to be filled. In this implementation, the filling result of the shared key includes the second identifier, so that the first key tool can determine, based on the second identifier, that the shared key fails to be filled.

In a possible implementation, the filling result of the shared key may further include the identifier of the vehicle and/or the identifier of the first component. In this way, the first key tool or the second key tool can monitor a filling status of the shared key of the vehicle and/or the first component.

In a possible implementation, the transceiver module 901 is further configured to receive a fourth instruction from the first key tool or a key detection tool. The fourth instruction includes a third random number, and the fourth instruction is used to determine whether the shared key is consistent with a local shared key of the first key tool or the key detection tool. The processing module 902 is further configured to determine a first check value based on the third random number and the shared key. The transceiver module 901 is further configured to send fourth response information. The fourth response information includes the first check value.

In a possible implementation, the transceiver module 901 is further configured to receive a fifth instruction from the first key tool or the key detection tool. The fifth instruction includes a fifth random number, and the fifth instruction may be used to detect whether the initial key of the first component is abnormal. The processing module 902 is further configured to determine a third check value based on the fifth random number and the initial key. The transceiver module 901 is further configured to send fifth response information. The fifth response information includes the third check value.

It should be understood that, for beneficial effects corresponding to the possible implementations of the control apparatus 900 shown in FIG. 9, refer to the foregoing descriptions. Details are not described herein again.

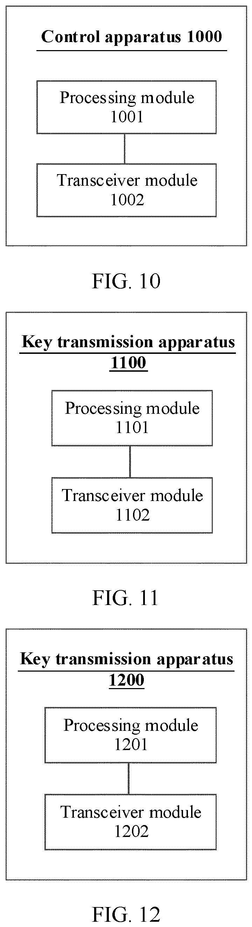

FIG. 10 is a schematic diagram of a possible structure of another control apparatus according to an embodiment of this application. The apparatus 1000 may be configured to perform a function of the second component 102.

The apparatus 1000 includes: a processing module 1001, configured to obtain a shared key filling instruction, where the shared key filling instruction includes information associated with a shared key, and the shared key is at least used to encrypt data including geographical location information; and

a transceiver module 1002, configured to send the shared key filling instruction.

For the data of the geographical location information, refer to the foregoing descriptions of the data of the geographical location information data. Details are not described herein again.

The shared key may be a shared key of all components in a vehicle, or may be a shared key of a component associated with a function domain in a vehicle. This is not limited in embodiments of this application.

There are a plurality of implementations of obtaining the shared key filling instruction, including but not limited to the following implementations.

Implementation 1: The shared key filling instruction may include a second instruction. For example, the shared key filling instruction is the second instruction. For another example, the shared key filling instruction includes other information in addition to the second instruction. The second instruction includes second information associated with the shared key. For related descriptions of the second information, refer to the foregoing descriptions. Details are not described herein again.

For example, that the processing module 1001 obtains the shared key filling instruction may be as follows: The transceiver module 1002 may receive the second instruction from a key tool 200, and use the second instruction as the shared key filling instruction.

Implementation 2: The shared key filling instruction includes a third instruction. For example, the shared key filling instruction is the third instruction. For another example, the shared key filling instruction includes other information in addition to the third instruction. The third instruction includes third information associated with the shared key. The third instruction may be implemented in a plurality of manners, including but not limited to the following implementations.

Manner 1: The transceiver module 1002 may receive a second instruction from a key tool 200, and the processing module 1001 obtains a third instruction after processing the second instruction.

For example, the processing module 1001 may convert a communication protocol format of the second instruction, to obtain the third instruction. Alternatively, the processing module 1001 may convert a communication protocol format of second information included in the second instruction, to obtain the third information included in the third instruction.

Correspondingly, a second component may receive the second instruction sent by a first key tool or a second key tool, and then obtain the third instruction by processing the second instruction. The second instruction includes the second information associated with the shared key. The second information may be implemented in a plurality of manners. For details, refer to an implementation of the second information in Implementation 1. Details are not described herein again.

Manner 2: The processing module 1001 generates the third instruction.

For example, the processing module 1001 may generate the third instruction when a preset condition is met or a specific instruction is received.

The "specific instruction" may be any instruction, and the second component may use the instruction as a trigger signal. For example, the specific instruction may be a diagnostic command specially used to generate the shared key filling instruction, or may be a diagnostic command of another function, for example, an instruction of component flushing or component reset. In an optional design, the specific instruction may be from a diagnostic instrument, an entire-vehicle electric inspection test device, a cloud, or another component (for example, a TBOX or a gateway GW) in the vehicle.

The preset condition includes but is not limited to that a device associated with the second component is started and a specific time point arrives.

It may be understood that "a device associated with the second component is started" may be that the second component is started or a device at which the second component is located is started. For example, the second component is A. In this case, when A is started or a device at which A is located is started, A may generate the third instruction. For another example, the second component is B. In this case, when B is started or a device at which B is located is started, B may generate the third instruction.

It may be understood that "a specific time point arrives" may be that a specified key filling time point (for example, 00:00 on the first day of each month) arrives or a preset day (for example, a previous day before key expiration) before key expiration arrives.

Correspondingly, in Manner 2, the third information may be implemented in a plurality of manners. For example, the processing module 1001 may generate a keying material (for example, the keying material is randomly generated or generated according to a specific rule), and use the keying material as the third information in the third instruction. For another example, the processing module 1001 may generate the shared key (for example, the shared key is randomly generated or generated according to a specific rule), obtain a ciphertext of the shared key based on an initial key and the shared key, and use the ciphertext as the third information.

In a possible design, the transceiver module 1002 may receive a second instruction from a first key tool or a second key tool. The second instruction includes second information associated with the shared key. The processing module 1001 obtains the shared key based on an initial key and the second information. The second instruction may be used to fill the shared key for the second component.

It should be noted that there are a plurality of implementations in which the processing module 1001 obtains the shared key based on the initial key and the second information, including but not limited to the following manners.

Manner 1: The processing module 1001 obtains, according to a symmetric encryption algorithm or based on a key derivation function or a message authentication code of a symmetric encryption algorithm, the shared key based on the initial key and the second information.

Manner 2: The second information includes information obtained by encrypting the shared key by using the initial key, and therefore the processing module 1001 may obtain the shared key based on the initial key and the second information. For example, the second information is decrypted by using the initial key, to obtain the shared key.

In another possible design, the processing module 1001 may directly generate the shared key.

In a possible design, the processing module 1001 may further send second response information in response to the second instruction. The second response information includes a filling result of the shared key. The filling result of the shared key may indicate that the shared key is successfully filled or the shared key fails to be filled.

Case 1: The filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction or a second random number included in the third instruction.

Case 2: The filling result of the shared key includes a fourth identifier. The fourth identifier may indicate that the shared key fails to be filled. In this design, the filling result of the shared key includes the fourth identifier, so that the first key tool can determine, based on the fourth identifier, that the shared key fails to be filled.

Optionally, the filling result of the shared key may further include an identifier of the vehicle and/or an identifier of the second component 102.

In a possible design, the processing module 1001 may receive a first instruction from the first key tool. The first instruction includes first information associated with the initial key. The processing module 1001 may obtain the initial key according to the first instruction. The initial key is at least used to generate the shared key, and the shared key is at least used to encrypt the data including the geographical location information. For an implementation of the first information, refer to the foregoing related descriptions.

In a possible design, the processing module 1001 may further send first response information to the first key tool. The first response information includes a filling result of the initial key. The filling result of the initial key may indicate that the initial key of the second component is successfully filled or the initial key fails to be filled.

Case 1: The filling result of the initial key includes: a first identifier, where the first identifier indicates that the initial key is successfully filled; and/or a third ciphertext, where the third ciphertext includes information obtained by encrypting, by using the initial key or a derived key of the initial key, a first random number included in the first instruction.

Case 2: The filling result of the initial key may include a second identifier. The second identifier may indicate that the initial key fails to be filled.

Optionally, the filling result of the initial key may further include the identifier of the vehicle and/or the identifier of the second component.

In a possible design, the transceiver module 1002 may further receive a fourth instruction from the first key tool or a key detection tool. The fourth instruction includes a third random number. The processing module 1001 determines a first check value based on the third random number and the shared key. The first check value is used to determine whether the shared key is consistent with a local shared key of the first key tool or the key detection tool. The transceiver module 1002 sends fourth response information. The fourth response information includes the first check value. The fourth instruction may be used to detect whether the shared key of the second component is abnormal.

In a possible design, the transceiver module 1002 is further configured to receive a fifth instruction from the first key tool or the key detection tool. The fifth instruction includes a fifth random number, and the fifth instruction may be used to detect whether the initial key of the second component is abnormal. The processing module 1001 is further configured to determine a third check value based on the fifth random number and the initial key. The transceiver module 1002 is further configured to send fifth response information. The fifth response information includes the third check value.

It should be understood that, for beneficial effects corresponding to the possible implementations of the control apparatus 1000 shown in FIG. 10, refer to the foregoing descriptions. Details are not described herein again.

FIG. 11 is a schematic diagram of a possible structure of a key transmission apparatus according to the foregoing embodiment of this application. The key transmission apparatus 1100 may be a first key tool.

For example, the apparatus 1100 includes:

a processing module 1101, configured to determine an initial key of a vehicle, where the initial key is at least used to generate a shared key, and the shared key is at least used to encrypt data including geographical location information; and

a transceiver module 1102, configured to send a first instruction to a first component of the vehicle, where the first instruction includes first information associated with the initial key.

For the data of the geographical location information, refer to the foregoing descriptions of the data of the geographical location information data. Details are not described herein again.

The shared key may be a shared key of all components in the vehicle, or may be a shared key of a component associated with a function domain in the vehicle. This is not limited in embodiments of this application.

In a possible implementation, the initial key is unrelated to an original equipment manufacturer OEM, or is unrelated to an OEM having no navigation electronic map production qualification. The OEM herein is an OEM associated with the vehicle.

In a possible design, the initial key is related to an organization having a navigation electronic map production qualification. This can ensure security of the initial key, thereby ensuring transmission security of the geographical location information.

In a possible implementation, the initial key is different from an authentication key, and the authentication key is from the original equipment manufacturer OEM associated with the vehicle. The authentication key is at least used to authenticate a function key of the vehicle. For example, the authentication key may be an MEK, a PMEK, or a root key. This is not specifically limited in embodiments of this application.

In a possible implementation, the first information includes a first ciphertext. The first ciphertext includes information obtained by encrypting the initial key by using a first public key. The first public key is from the first component.

In a possible implementation, the first information includes the initial key. The transceiver module 1102 is further configured to send the initial key to the first component in a wired connection manner.

In a possible implementation, the transceiver module 1102 is further configured to: generate a second public key and a second private key; send request information to a key management system, where the request information requests the initial key, and the request information includes the second public key; and receive a second ciphertext from the key management system. The processing module 1101 is further configured to determine the initial key based on the second ciphertext and the second private key.

In another possible implementation, the transceiver module 1102 is further configured to: send request information to a key management system, where the request information requests the initial key, and the request information includes a preconfigured key; receive a second ciphertext, where the second ciphertext includes information about encrypting the initial key by using the preconfigured key; and determine the initial key based on the second ciphertext and the preconfigured key.

In a possible implementation, the transceiver module 1102 is further configured to receive first response information from the first component. The first response information includes a filling result of the initial key.

If the filling result of the initial key indicates that the initial key fails to be filled, the transceiver module 1102 is further configured to resend the first instruction. In this implementation, a possibility of successfully filling the initial key can be effectively improved.

In a possible implementation, the filling result of the initial key includes a second identifier. The second identifier indicates that the initial key fails to be filled.

In a possible implementation, the filling result of the initial key may include: a first identifier, where the first identifier indicates that the initial key is successfully filled; and/or a third ciphertext, where the third ciphertext includes information obtained by encrypting, by using the initial key or a derived key of the initial key, a first random number included in the first instruction.

Correspondingly, when the filling result of the initial key includes the third ciphertext, the processing module 1101 is further configured to determine, based on the third ciphertext, whether the initial key is successfully filled. In this implementation, whether the initial key is successfully filled is verified by using the third ciphertext. This helps the first key tool accurately monitor a filling status of the initial key.

In a possible implementation, the filling result of the initial key may further include an identifier of the vehicle and/or an identifier of the first component.

In a possible implementation, if the filling result of the initial key indicates that the initial key is successfully filled, the transceiver module 1102 is further configured to send a second instruction to the first component. The second instruction includes second information associated with the shared key.

In a possible implementation, the processing module 1101 is further configured to: generate the shared key, and encrypt the shared key based on the initial key, to obtain the second information.

In a possible implementation, the transceiver module 1102 is further configured to receive second response information from the first component. The second response information includes a filling result of the shared key.

In a possible implementation, the filling result of the shared key may include: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction.

Correspondingly, when the filling result of the shared key includes the fourth ciphertext, the processing module 1101 is further configured to determine, based on the second information and the fourth ciphertext, whether the shared key is successfully filled.

In a possible implementation, the filling result of the shared key may further include a fourth identifier. The fourth identifier indicates that the shared key fails to be filled.

In a possible implementation, if the filling result of the shared key indicates that the shared key fails to be filled, the transceiver module 1102 is further configured to resend the second instruction.

In a possible implementation, the filling result of the shared key may further include the identifier of the vehicle and/or the identifier of the first component.

In a possible design, the transceiver module 1102 is further configured to: send a fourth instruction to the first component of the vehicle, where the fourth instruction includes a third random number; receive fourth response information from the first component, where the fourth response information includes a first check value, the first check value is associated with the third random number and the shared key of the vehicle, and the shared key is at least used to encrypt the data including the geographical location information; determine, based on the first check value, whether the shared key of the vehicle is consistent with a local shared key corresponding to the vehicle; and report abnormality information if the shared key of the vehicle is inconsistent with the local shared key.

In a possible design, the transceiver module 1102 is further configured to: send a fifth instruction to the first component of the vehicle, where the fourth instruction includes a fifth random number; receive fifth response information from the first component, where the fifth response information includes a third check value, the third check value is associated with the fifth random number and an initial key of the vehicle, and the initial key is at least used to generate the shared key; determine, based on the third check value, whether the initial key of the vehicle is consistent with a local initial key corresponding to the vehicle; and report abnormality information if the initial key of the vehicle is inconsistent with the local shared key.

It should be understood that, for beneficial effects corresponding to the possible implementations of the key transmission apparatus 1100 shown in FIG. 11, refer to the foregoing descriptions. Details are not described herein again.

FIG. 12 is a schematic diagram of a possible structure of another key transmission apparatus according to the foregoing embodiment of this application. The key transmission apparatus 1200 may be a second key tool.

For example, the apparatus 1200 includes:

a processing module 1201, configured to determine a second instruction; and
a transceiver module 1202, configured to send the second instruction to a first component in a vehicle, where the second instruction includes second information associated with a shared key, the shared key is at least used to encrypt data including geographical location information, and the second instruction is used to fill the shared key for the first component.

The shared key may be a shared key of all components in the vehicle, or may be a shared key of a component associated with a function domain in the vehicle. This is not limited in embodiments of this application.

For the data of the geographical location information, refer to the foregoing descriptions of the data of the geographical location information data. Details are not described herein again.

It should be noted that the second information may be implemented in a plurality of manners, including but not limited to the following implementations.

Manner 1: The processing module 1201 generates the shared key, and obtains the second information based on an initial key and the shared key. For example, the second key tool may encrypt the shared key based on the initial key, to obtain the second information.

Manner 2: The processing module 1201 may generate a keying material, and use the keying material as the second information.

For example, the processing module 1201 may randomly generate the keying material or generate the keying material according to a specific rule.

Manner 3: The transceiver module 1202 may request the shared key from a first key tool, and the processing module 1201 obtains the second information based on an initial key and the shared key. For example, the processing module 1201 encrypts the shared key based on the initial key, to obtain the second information.

In a possible implementation, the transceiver module 1202 may further receive second response information from the first component. The second response information includes a filling result of the shared key.

In a possible implementation, the filling result of the shared key includes: a third identifier, where the third identifier indicates that the shared key is successfully filled; and/or a fourth ciphertext, where the fourth ciphertext includes information obtained by encrypting, by using the shared key or a derived key of the shared key, a second random number included in the second instruction.

In a possible implementation, when the filling result of the shared key includes the fourth ciphertext, the processing module 1201 may further determine, based on the second information and the fourth ciphertext, whether the shared key is successfully filled.

In a possible implementation, if the filling result of the shared key indicates that the shared key fails to be filled, the transceiver module 1202 may further resend the second instruction.

In a possible implementation, the filling result of the shared key includes a fourth identifier. The fourth identifier indicates that the shared key fails to be filled.

In a possible implementation, the filling result of the shared key may further include an identifier of the vehicle and/or an identifier of the first component.

It should be understood that, for beneficial effects corresponding to the possible implementations of the key transmission apparatus 1200 shown in FIG. 12, refer to the foregoing descriptions. Details are not described herein again.

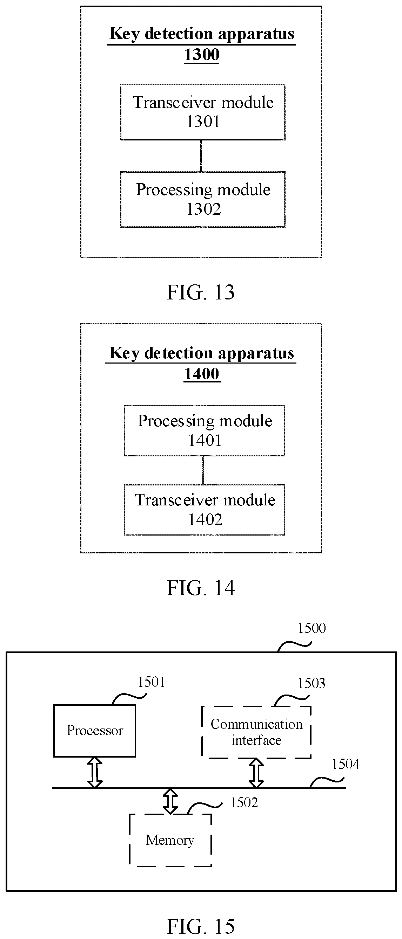

FIG. 13 is a schematic diagram of a possible structure of a key detection apparatus according to the foregoing embodiment of this application.

For example, the apparatus 1300 includes:

a transceiver module 1301, configured to send a fourth instruction to a first component of a vehicle, where the fourth instruction includes a third random number; and
the transceiver module 1301 is further configured to receive fourth response information from the first component, where the fourth response information includes a first check value, the first check value is associated with the third random number and a shared key of the vehicle, and the shared key is at least used to encrypt data including geographical location information; and
a processing module 1302, configured to determine, based on the first check value, whether the shared key of the vehicle is consistent with a local shared key corresponding to the vehicle; and
the transceiver module 1301 is further configured to report abnormality information if the shared key of the vehicle is inconsistent with the local shared key.

The shared key of the vehicle may be a shared key of all components in the vehicle, or may be a shared key of a component associated with a function domain in the vehicle. This is not limited in embodiments of this application.

For the data of the geographical location information, refer to the foregoing descriptions of the data of the geographical location information data. Details are not described herein again.

In a possible design, the processing module 1302 may be configured to: calculate a second check value based on the local shared key and the third random number, compare the first check value with the second check value, and if the first check value is consistent with the second check value, determine that the local shared key of the vehicle is consistent with a current shared key of the vehicle; or if the first check value is inconsistent with the second check value, determine that the local shared key of the vehicle is inconsistent with a current shared key of the vehicle.

There are a plurality of implementations in which the processing module 1302 obtains the local shared key, including but not limited to the following manners.

Manner 1: Obtain an identifier of the vehicle or an identifier of the first component. Query, based on the identifier of the vehicle or the identifier of the first component, an initial key corresponding to the vehicle and a keying material used to generate the local shared key. Generate the local shared key based on the initial key and the keying material. In this way, a local shared key of a key detection tool has high real-time performance.

Manner 2: Obtain an identifier of the vehicle or an identifier of the first component. Query the local shared key based on the identifier of the vehicle or the identifier of the first component. In this way, a key detection tool can quickly obtain the local shared key, to improve key detection efficiency.

In a possible design, the transceiver module 1301 may report the abnormality information to a qualification management organization, or report the abnormality information to a key management system.

In a possible implementation, the key detection apparatus 1300 is the key detection tool.

It should be understood that, for beneficial effects corresponding to the possible implementations of the key detection apparatus 1300 shown in FIG. 13, refer to the foregoing descriptions. Details are not described herein again.

FIG. 14 is a schematic diagram of a possible structure of another key detection apparatus according to the foregoing embodiment of this application.

For example, the apparatus 1400 includes:

a processing module 1401, configured to obtain a communication information ciphertext of a first component of a vehicle, where the communication information ciphertext includes information obtained by encrypting first information by using a shared key of the vehicle, and the first information includes geographical location information; and
the processing module 1401 is further configured to determine, based on a local shared key corresponding to the vehicle and the communication information ciphertext, whether the shared key of the vehicle is consistent with the local shared key; and

a transceiver module 1402, configured to report abnormality information if the shared key of the vehicle is inconsistent with the local shared key.

For data of the geographical location information, refer to the foregoing descriptions of the data of the geographical location information data. Details are not described herein again.

In a possible design, the processing module 1401 may decrypt the communication information ciphertext by using the local shared key, to obtain communication information, determine whether the communication information is abnormal, and if the communication information is abnormal, determine that the shared key used by the vehicle is inconsistent with the local shared key; or if the communication information is normal, determine that the shared key used by the vehicle is consistent with the local shared key.

In a possible design, there are a plurality of implementations in which the processing module 1401 obtains the local shared key, including but not limited to the following manners.

Manner 1: Obtain an identifier of the vehicle or an identifier of the first component. Query, based on the identifier of the vehicle or the identifier of the first component, an initial key corresponding to the vehicle and a keying material used to generate the local shared key. Generate the local shared key based on the initial key and the keying material. In this way, a local shared key of a key detection tool has high real-time performance.

Manner 2: Obtain an identifier of the vehicle or an identifier of the first component. Query the local shared key based on the identifier of the vehicle or the identifier of the first component. In this way, a key detection tool can quickly obtain the local shared key, to improve key detection efficiency.

In a possible design, the transceiver module 1402 may further report the abnormality information to a qualification management organization, or report the abnormality information to a key management system.

The shared key may be a shared key of all components in the vehicle, or may be a shared key of a component associated with a function domain in the vehicle. This is not limited in embodiments of this application.

For data of the geographical location information, refer to the foregoing descriptions of the data of the geographical location information data. Details are not described herein again.

In a possible implementation, the key detection apparatus 1400 is the key detection tool.

It should be understood that, for beneficial effects corresponding to the possible implementations of the key detection apparatus 1400 shown in FIG. 14, refer to the foregoing descriptions. Details are not described herein again.

An embodiment of this application further provides a chip system. Refer to FIG. 15. The chip system 1500 includes at least one processor. When program instructions are executed on the at least one processor 1501, the method embodiments shown in FIG. 2 to FIG. 8 are implemented.

In addition, the chip system may further include a communication interface 1503, and the communication interface is configured to input or output information. Further, the chip system may further include a memory 1502. The memory 1502 is coupled to the processor through the communication interface 1503, and is configured to store the foregoing instructions, so that the processor reads, through the communication interface 1503, the instructions stored in the memory.

It should be understood that a connection medium between the processor 1501, the memory 1502, and the communication interface 1503 is not limited in embodiments of this application. In embodiments of this application, the memory 1502, the processor 1501, and the communication interface 1503 are connected through a communication bus 1504 in FIG. 15. The bus is represented by a thick line in FIG. 15. A connection manner between other components is merely an example for description, and does not constitute a limitation. The bus may include an address bus, a data bus, a control bus, and the like. For ease of representation, in FIG. 15, only one thick line is used for representation, but this does not mean that there is only one bus, only one type of bus, or the like.

An embodiment of this application further provides a vehicle. The vehicle includes the first component in any one of the first aspect or the possible designs of the first aspect, and/or the second component in any one of the second aspect or the possible designs of the second aspect.

An embodiment of this application further provides a computer program product including instructions. When the computer program product runs on the foregoing apparatus, the key transmission method in the foregoing embodiment may be performed, or the key detection method in the foregoing embodiment may be performed.

An embodiment of this application further provides a computer-readable storage medium. The computer-readable storage medium stores a computer program. When the computer program is run, the key transmission method in the foregoing embodiment may be implemented, or the key detection method in the foregoing embodiment may be implemented. The foregoing embodiments may be combined with each other to achieve different technical effects.

Based on the foregoing descriptions of the implementations, a person skilled in the art may clearly understand that, for ease and brevity of description, division into the foregoing functional modules is merely used as an example for description. In actual application, the foregoing functions may be allocated to different functional modules for implementation based on a requirement, that is, an inner structure of the apparatus is divided into different functional modules, to implement all or some of the functions described above.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specified function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims of this application and equivalent technologies thereof.

## Claims

1. A key transmission method, applied to a first component in a vehicle, wherein the method comprises:

   receiving a first instruction from a first key tool, wherein the first instruction comprises first information associated with an initial key; and obtaining the initial key according to the first instruction, wherein
   the initial key is at least used to generate a shared key, and the shared key is at least used to encrypt data comprising geographical location information.

2. The method according to claim 1, wherein the initial key is unrelated to an original equipment manufacturer OEM, or is unrelated to an original equipment manufacturer OEM having no navigation electronic map production qualification, and the OEM is associated with the vehicle.

3. The method according to claim 1 or 2, wherein the initial key is different from an authentication key, and the authentication key is from the original equipment manufacturer OEM associated with the vehicle; and the method further comprises:
   determining at least one function key based on the authentication key, wherein the at least one function key corresponds to at least one service function of the first component.

4. The method according to any one of claims 1 to 3, wherein the first information comprises a first ciphertext, and the first ciphertext comprises information obtained by encrypting the initial key by using a first public key of the first component; and the obtaining the initial key according to the first instruction comprises:

   decrypting the first ciphertext based on a first private key of the first component, to obtain the initial key, wherein
   the first private key corresponds to the first public key.

5. The method according to any one of claims 1 to 3, wherein the first information comprises the initial key, and the obtaining the initial key according to the first instruction comprises:
   obtaining the initial key according to the first instruction in a wired connection manner.

6. The method according to any one of claims 1 to 5, wherein the method further comprises:
sending first response information to the first key tool, wherein the first response information comprises a filling result of the initial key.

7. The method according to claim 6, wherein the filling result of the initial key comprises:

a first identifier, wherein the first identifier indicates that the initial key is successfully filled; and/or
a third ciphertext, wherein the third ciphertext comprises information obtained by encrypting, by using the initial key or a derived key of the initial key, a first random number comprised in the first instruction.

8. The method according to claim 6, wherein the filling result comprises a second identifier, and the second identifier indicates that the initial key fails to be filled.

9. The method according to any one of claims 1 to 8, wherein the method further comprises:

receiving a second instruction from the first key tool or a second key tool, wherein the second instruction comprises second information associated with the shared key; and
obtaining the shared key based on the initial key and the second information, wherein
the first key tool and the second key tool correspond to different key filling environments.

10. The method according to claim 9, wherein the obtaining the shared key based on the initial key and the second information comprises:
obtaining, according to a symmetric encryption algorithm or based on a key derivation function or a message authentication code of a symmetric encryption algorithm, the shared key based on the initial key and the second information.

11. The method according to claim 9, wherein the second information comprises information obtained by encrypting the shared key by using the initial key, and the obtaining the shared key based on the initial key and the second information comprises:
decrypting the second information by using the initial key, to obtain the shared key.

12. The method according to any one of claims 1 to 8, wherein the method further comprises:

receiving a third instruction from a second component, wherein the third instruction comprises third information associated with the shared key; and
obtaining the shared key based on the initial key and the third information, wherein
the second component is at least configured to distribute key information from a key tool.

13. The method according to claim 12, wherein the obtaining the shared key based on the initial key and the third information comprises:
obtaining, according to a symmetric encryption algorithm or based on a key derivation function or a message authentication code of a symmetric encryption algorithm, the shared key based on the initial key and the third information.

14. The method according to claim 12, wherein the third information comprises information obtained by encrypting the shared key by using the initial key, and the obtaining the shared key based on the initial key and the third information comprises:
decrypting the third information by using the initial key, to obtain the shared key.

15. The method according to any one of claims 9 to 11, wherein the method further comprises:
sending second response information in response to the second instruction, wherein the second response information comprises a filling result of the shared key.

16. The method according to any one of claims 12 to 14, wherein the method further comprises:
sending third response information in response to the third instruction, wherein the third response information comprises a filling result of the shared key.

17. The method according to claim 15 or 16, wherein the filling result of the shared key comprises:

a third identifier, wherein the third identifier indicates that the shared key is successfully filled; and/or
a fourth ciphertext, wherein the fourth ciphertext comprises information obtained by encrypting, by using the shared key or a derived key of the shared key, a second random number comprised in the second instruction or a second random number comprised in the third instruction.

18. The method according to claim 15 or 16, wherein the filling result of the shared key comprises a fourth identifier, and the fourth identifier indicates that the shared key fails to be filled.

19. The method according to any one of claims 1 to 18, wherein the method further comprises:

receiving a fourth instruction from the first key tool or a key detection tool, wherein the fourth instruction comprises a third random number, and the fourth instruction may be used to detect whether the shared key is abnormal;

determining a first check value based on the third random number and the shared key; and

sending fourth response information, wherein the fourth response information comprises the first check value.

20. A key transmission method, applied to a second component in a vehicle, wherein the method comprises:

obtaining a shared key filling instruction, wherein the shared key filling instruction is used to fill a shared key for a first component in the vehicle, and the shared key is at least used to encrypt data comprising geographical location information; and

sending the shared key filling instruction to the first component.

21. The method according to claim 20, wherein the obtaining a shared key filling instruction comprises:

receiving a second instruction from a first key tool or a second key tool, wherein the second instruction comprises second information associated with the shared key; and

the shared key filling instruction comprises the second instruction.

22. The method according to claim 20, wherein the obtaining a shared key filling instruction comprises:

receiving a second instruction from a first key tool or a second key tool, wherein the second instruction comprises second information associated with the shared key; and

processing the second instruction, to obtain a third instruction, wherein the third instruction comprises third information associated with the shared key; and

the shared key filling instruction comprises the third instruction.

23. The method according to claim 20, wherein the obtaining a shared key filling instruction comprises:

generating a third instruction, wherein the third instruction comprises third information associated with the shared key; and

the shared key filling instruction comprises the third instruction.

24. The method according to claim 23, wherein the generating a third instruction comprises:

generating a keying material, wherein the keying material is used to generate the shared key and is comprised in the third information; or

generating the shared key, and obtaining a ciphertext of the shared key based on an initial key and the shared key, wherein the ciphertext is comprised in the third information.

25. A key transmission method, applied to a first key tool, wherein the method comprises:

determining an initial key of a vehicle, wherein the initial key is at least used to generate a shared key, and the shared key is at least used to encrypt data comprising geographical location information; and

sending a first instruction to a first component of the vehicle, wherein the first instruction comprises first information associated with the initial key.

26. The method according to claim 25, wherein the initial key is unrelated to an original equipment manufacturer OEM, or is unrelated to an original equipment manufacturer OEM having no navigation electronic map production qualification, and the OEM is associated with the vehicle.

27. The method according to claim 25 or 26, wherein the initial key is different from an authentication key, and the authentication key is from the original equipment manufacturer OEM associated with the vehicle.

28. The method according to any one of claims 25 to 27, wherein the first information comprises a first ciphertext, the first ciphertext comprises information obtained by encrypting the initial key by using a first public key, and the first public key is from the first component.

29. The method according to any one of claims 25 to 27, wherein the first information comprises the initial key, and the sending a first instruction to a first component of the vehicle comprises:
sending the initial key to the first component in a wired connection manner.

30. The method according to any one of claims 25 to 29, wherein the determining an initial key of a vehicle comprises:

generating a second public key and a second private key;

sending request information to a key management system, wherein the request information requests the initial key, and the request information comprises the second public key;

receiving a second ciphertext from the key management system; and

determining the initial key based on the second ciphertext and the second private key.

31. The method according to any one of claims 25 to 30, wherein the method further comprises: receiving first response information from the first component, wherein the first response information comprises a filling result of the initial key.

32. The method according to claim 31, wherein if the filling result of the initial key indicates that the initial key fails to be filled, the method further comprises: resending the first instruction.

33. The method according to claim 31 or 32, wherein the filling result of the initial key comprises a second identifier, and the second identifier indicates that the initial key fails to be filled.

34. The method according to claim 31, wherein if the filling result of the initial key indicates that the initial key is successfully filled, the method further comprises: sending a second instruction to the first component, wherein the second instruction comprises second information associated with the shared key.

35. The method according to claim 31 or 34, wherein the filling result of the initial key comprises:

a first identifier, wherein the first identifier indicates that the initial key is successfully filled; and/or a third ciphertext, wherein the third ciphertext comprises information obtained by encrypting, by using the initial key or a derived key of the initial key, a first random number comprised in the first instruction.

36. The method according to claim 35, wherein when the filling result of the initial key comprises the third ciphertext, the method further comprises: determining, based on the third ciphertext, whether the initial key is successfully filled.

37. The method according to claim 34, wherein the method further comprises:

generating the shared key; and encrypting the shared key based on the initial key, to obtain the second information.

38. The method according to any one of claims 34 to 37, wherein the method further comprises: receiving second response information from the first component, wherein the second response information comprises a filling result of the shared key.

39. The method according to claim 38, wherein the filling result of the shared key comprises:

a third identifier, wherein the third identifier indicates that the shared key is successfully filled; and/or a fourth ciphertext, wherein the fourth ciphertext comprises information obtained by encrypting, by using the shared key or a derived key of the shared key, a second random number comprised in the second instruction.

40. The method according to claim 39, wherein when the filling result of the shared key comprises the fourth ciphertext, the method further comprises: determining, based on the second information and the fourth ciphertext, whether the shared key is successfully filled.

41. The method according to claim 40, wherein if the filling result of the shared key indicates that the shared key fails to be filled, the method further comprises: resending the second instruction.

42. The method according to claim 41, wherein the filling result of the shared key comprises a fourth identifier, and the fourth identifier indicates that the shared key fails to be filled.

43. A key detection method, wherein the method comprises:

sending a fourth instruction to a first component of a vehicle, wherein the fourth instruction comprises a third random number; receiving fourth response information from the first component, wherein the fourth response information comprises a first check value, the first check value is associated with the third random number and a shared key of the vehicle, and the shared key is at least used to encrypt data comprising geographical location information; determining, based on the first check value, whether the shared key of the vehicle is consistent with a local shared key corresponding to the vehicle; and reporting abnormality information if the shared key of the vehicle is inconsistent with the local shared key.

44. A key detection method, wherein the method comprises:

obtaining a communication information ciphertext of a first component of a vehicle, wherein the communication information ciphertext comprises information obtained by encrypting first information by using a shared key of the vehicle, and the first information comprises geographical location information;

determining, based on the communication information ciphertext, whether the shared key of the vehicle is consistent with a local shared key of the vehicle; and

reporting abnormality information if the shared key of the vehicle is inconsistent with the local shared key.

45. The method according to claim 43 or 44, wherein the method further comprises:
obtaining an identifier of the vehicle or an identifier of the first component; querying, based on the identifier of the vehicle or the identifier of the first component, an initial key corresponding to the vehicle and a keying material used to generate the local shared key; and generating the local shared key based on the initial key and the keying material; or querying the local shared key based on the identifier of the vehicle or the identifier of the first component.

46. A control apparatus, comprising:

a transceiver module, configured to receive a first instruction from a first key tool, wherein the first instruction comprises first information associated with an initial key; and

a processing module, configured to obtain the initial key according to the first instruction, wherein

the initial key is at least used to generate a shared key, and the shared key is at least used to encrypt data comprising geographical location information.

47. A control apparatus, comprising:

a processing module, configured to obtain a shared key filling instruction, wherein the shared key filling instruction is used to fill a shared key for a first component, and the shared key is at least used to encrypt data comprising geographical location information; and

a transceiver module, configured to send the shared key filling instruction to the first component.

48. A key transmission apparatus, comprising:

a processing module, configured to determine an initial key of a vehicle, wherein the initial key is at least used to generate a shared key, and the shared key is at least used to encrypt data comprising geographical location information; and

a transceiver module, configured to send a first instruction to a first component of the vehicle, wherein the first instruction comprises first information associated with the initial key.

49. A key detection apparatus, comprising:

a transceiver module, configured to send a fourth instruction to a first component of a vehicle, wherein the fourth instruction comprises a third random number, wherein

the transceiver module is further configured to receive fourth response information from the first component, wherein the fourth response information comprises a first check value, the first check value is associated with the third random number and a shared key of the vehicle, and the shared key is at least used to encrypt data comprising geographical location information; and

a processing module, configured to: determine, based on the first check value, whether the shared key of the vehicle is consistent with a local shared key corresponding to the vehicle; and

report abnormality information if the shared key of the vehicle is inconsistent with the local shared key.

50. A key detection apparatus, comprising:

a processing module, configured to obtain a communication information ciphertext of a first component of a vehicle, wherein the communication information ciphertext comprises information obtained by encrypting first information by using a shared key of the vehicle, and the first information comprises geographical location information, wherein

the processing module is further configured to determine, based on a local shared key corresponding to the vehicle and the communication information ciphertext, whether the shared key of the vehicle is consistent with the local shared key; and

a transceiver module, configured to report abnormality information if the shared key of the vehicle is inconsistent with the local shared key.

51. An on-board component, wherein the on-board component comprises a processor and a storage medium, the storage medium stores instructions, and when the instructions are run by the processor, the on-board component is enabled to perform the method according to any one of claims 1 to 19 or the method according to any one of claims 20 to 24.

52. An electronic device, wherein the electronic device comprises a processor and a storage medium, the storage medium stores instructions, and when the instructions are run by the processor, the electronic device is enabled to perform the method according to any one of claims 25 to 42, or claim 43, or claim 44 or 45.

53. A vehicle, comprising a first component configured to perform the method according to any one of claims 1 to 19, and a second component configured to perform the method according to any one of claims 20 to 24.

54. A chip, comprising one or more processors and an interface circuit, wherein the interface circuit is configured to provide an information input and/or output for the one or more processors, and the chip is configured to perform the method according to any one of claims 1 to 19, or any one of claims 20 to 24, or any one of claims 25 to 42, or claim 43, or claim 44 or 45.

55. A computer-readable storage medium, wherein the computer-readable storage medium stores instructions, and when the instructions are run, the method according to any one of claims 1 to 19, or any one of claims 20 to 24, or any one of claims 25 to 42, or claim 43, or claim 44 or 45 is performed.

56. A computer program product, wherein when the computer program product runs on one or more processors, the method according to any one of claims 1 to 19, or any one of claims 20 to 24, or any one of claims 25 to 42, or claim 43, or claim 44 or 45 is performed.

FIG. 1

FIG. 2

| Key tool 200 | | First component 102 |
|---|---|---|

S301: Determine an initial key of a vehicle

S302: First instruction (first information)

S303: Obtain the initial key according to the first instruction

S304: First response information (a filling result of the initial key)

FIG. 3

| Key tool 200 | | Key management system |
|---|---|---|

S3011: Generate a second public key and a second private key

S3012: Request message (the second public key)

S3013: Generate a second ciphertext based on the second public key

S3014: Second ciphertext

S3015: Determine an initial key based on the second ciphertext and the second private key

FIG. 4

```
┌─────────────────┐                              ┌─────────────────┐
│                 │                              │ First component │
│  Key tool 200   │                              │      101        │
│                 │                              │                 │
└────────┬────────┘                              └────────┬────────┘
         │                                       ┌─────────┴─────────┐
         │                                       │ S3021: Generate a │
         │                                       │first public key and a│
         │                                       │  first private key │
         │                                       └─────────┬─────────┘
         │        S3022: First public key                  │
         │◄────────────────────────────────────────────────│
┌────────┴────────┐                                       │
│ S3023: Obtain a first │                                 │
│  ciphertext based on  │                                 │
│  the first public key │                                 │
│   and an initial key  │                                 │
└────────┬────────┘                                       │
         │        S3024: First ciphertext                 │
         │────────────────────────────────────────────────►│
         │                                       ┌─────────┴─────────┐
         │                                       │  S3025: Obtain the │
         │                                       │  initial key based on│
         │                                       │ the first private key│
         │                                       │    and the first    │
         │                                       │     ciphertext      │
         │                                       └─────────┬─────────┘
         │                                                 │
```

FIG. 5

```
┌─────────────────┐                              ┌─────────────────┐
│                 │                              │ First component │
│  Key tool 200   │                              │      101        │
│                 │                              │                 │
└────────┬────────┘                              └────────┬────────┘
         │  S601: Send a second instruction (second information) │
         │────────────────────────────────────────────────►│
         │                                       ┌─────────┴─────────┐
         │                                       │ S602: Determine a │
         │                                       │  shared key based on │
         │                                       │    the second       │
         │                                       │ information and an  │
         │                                       │    initial key      │
         │                                       └─────────┬─────────┘
         │       S603: Second response information         │
         │     (a filling result of the shared key)        │
         │◄────────────────────────────────────────────────│
         │                                                 │
```

FIG. 6

Second
component 102

First component
101

S701: Obtain a
shared key filling
instruction

S702: Send the shared key filling instruction

S703: Determine a
shared key according
to the shared key
filling instruction and
an initial key

S704: Send response information of
the shared key filling instruction

FIG. 7

```
┌─────────────────┐                              ┌─────────────────┐
│   Key tool 200  │                              │ First component │
│                 │                              │       101       │
└────────┬────────┘                              └────────┬────────┘
         │        S800: Identity authentication           │
         │<- - - - - - - - - - - - - - - - - - - - - - - ->│
         │                                                │
         │   S801: Fourth instruction (a third random number)
         │───────────────────────────────────────────────>│
         │                                    ┌────────────┴──────────────┐
         │                                    │ S802: Determine a first   │
         │                                    │ check value based on the  │
         │                                    │ third random number and   │
         │                                    │ a shared key              │
         │                                    └────────────┬──────────────┘
         │ S803: Fourth response information (the first check value)
         │<───────────────────────────────────────────────│
```

S804:
Determine, based on
the first check value, whether the
shared key of a vehicle is consistent
with a local shared key
corresponding to the
vehicle

No

S805: Upload
abnormality information

FIG. 8

---

**Control apparatus 900**

Transceiver module
901

Processing module
902

FIG. 9

**Control apparatus 1000**

Processing module
1001

Transceiver module
1002

FIG. 10

**Key transmission apparatus
1100**

Processing module
1101

Transceiver module
1102

FIG. 11

**Key transmission apparatus
1200**

Processing module
1201

Transceiver module
1202

FIG. 12

**Key detection apparatus
1300**

Transceiver module
1301

Processing module
1302

FIG. 13

**Key detection apparatus
1400**

Processing module
1401

Transceiver module
1402

FIG. 14

1500

1501        1503

Processor        Communication
interface

1504

1502

Memory

FIG. 15

## INTERNATIONAL SEARCH REPORT

International application No.

**PCT/CN2021/119432**

| A. | CLASSIFICATION OF SUBJECT MATTER |
|---|---|

H04W 4/48(2018.01)i;  H04L 9/08(2006.01)i

According to International Patent Classification (IPC) or to both national classification and IPC

| B. | FIELDS SEARCHED |
|---|---|

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CCNPAT, CNKI, WPI, EPODOC: 车辆, 密钥, 共享密钥, 初始密钥, 种子, 灌装, 位置, 随机数, 校验, 验证, 密文, car, vehicle, key, share, initial, seed, fill, location, random number, verify, check, cryptograph

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112640502 A (HUAWEI TECHNOLOGIES CO., LTD.) 09 April 2021 (2021-04-09) description, paragraphs 0127, 0139, 0239-0240, 0260-0271, and 0443 | 1-19, 25-42, 46, 48, 51-56 |
| X | CN 110266474 A (ASIAINFO TECHNOLOGIES (CHENGDU), INC.) 20 September 2019 (2019-09-20) description, paragraphs 0073-0088 | 20-24, 47, 51, 53, 55-56 |
| X | CN 106899404 A (TONGJI UNIVERSITY) 27 June 2017 (2017-06-27) description, paragraphs 0068-0070 | 43, 49, 52, 54-56 |
| Y | CN 109788002 A (BEIJING SHOUQI ZHIXING TECHNOLOGY CO., LTD.) 21 May 2019 (2019-05-21) description, paragraphs 0046-0050 | 44-45, 50, 52, 54-56 |
| Y | CN 106209910 A (SHANGHAI HANGSHENG INDUSTURY CO., LTD.) 07 December 2016 (2016-12-07) description, paragraphs 0064-0066 | 44-45, 50, 52, 54-56 |
| A | CN 101873588 A (DATANG MICROELECTRONIC TECHNOLOGY CO., LTD.) 27 October 2010 (2010-10-27) entire document | 1-56 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 May 2022** | **22 June 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/119432** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 104268458 A (WEICHAI POWER CO., LTD.) 07 January 2015 (2015-01-07) entire document | 1-56 |
| A | CN 113056898 A (HUAWEI TECHNOLOGIES CO., LTD.) 29 June 2021 (2021-06-29) entire document | 1-56 |
| A | CN 112652093 A (HYUNDAI MOTOR COMPANY et al.) 13 April 2021 (2021-04-13) entire document | 1-56 |
| A | US 2007086593 A1 (GEOCODEX LLC) 19 April 2007 (2007-04-19) entire document | 1-56 |

Form PCT/ISA/210 (second sheet) (January 2015)

INTERNATIONAL SEARCH REPORT
Information on patent family members

International application No.

**PCT/CN2021/119432**

| Patent document cited in search report | | | Publication date (day/month/year) | Patent family member(s) | | | Publication date (day/month/year) |
|---|---|---|---|---|---|---|---|
| CN | 112640502 | A | 09 April 2021 | WO | 2021179331 | A1 | 16 September 2021 |
| CN | 110266474 | A | 20 September 2019 | None | | | |
| CN | 106899404 | A | 27 June 2017 | None | | | |
| CN | 109788002 | A | 21 May 2019 | None | | | |
| CN | 106209910 | A | 07 December 2016 | None | | | |
| CN | 101873588 | A | 27 October 2010 | None | | | |
| CN | 104268458 | A | 07 January 2015 | None | | | |
| CN | 113056898 | A | 29 June 2021 | None | | | |
| CN | 112652093 | A | 13 April 2021 | KR | 20210042470 | A | 20 April 2021 |
| | | | | US | 2021111871 | A1 | 15 April 2021 |
| | | | | DE | 102020110625 | A1 | 15 April 2021 |
| US | 2007086593 | A1 | 19 April 2007 | US | 2014380047 | A1 | 25 December 2014 |
| | | | | US | 2017237556 | A9 | 17 August 2017 |

Form PCT/ISA/210 (patent family annex) (January 2015)